(19) Europäisches Patentamt
European Patent Office
Office européen des brevets

(11) **EP 2 248 646 A1**

(12) **EUROPEAN PATENT APPLICATION**
published in accordance with Art. 153(4) EPC

(43) Date of publication:
**10.11.2010 Bulletin 2010/45**

(51) Int Cl.:
*B29C 33/38* (2006.01)  *C03B 23/025* (2006.01)
*G02B 3/00* (2006.01)  *G02C 7/06* (2006.01)
*G02C 13/00* (2006.01)

(21) Application number: **08871636.0**

(22) Date of filing: **25.11.2008**

(86) International application number:
**PCT/JP2008/071352**

(87) International publication number:
**WO 2009/096085 (06.08.2009 Gazette 2009/32)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **31.01.2008 JP 2008020860
31.01.2008 JP 2008020875
31.01.2008 JP 2008020921**

(71) Applicant: **Hoya Corporation
Tokyo 161-8525 (JP)**

(72) Inventors:
• **TAGUCHI, Noriaki
Tokyo 161-8525 (JP)**
• **TAKIZAWA, Shigeru
Tokyo 161-8525 (JP)**
• **SHIMIZU, Hidetaka
Tokyo 161-8525 (JP)**

(74) Representative: **Betten & Resch
Patentanwälte
Theatinerstrasse 8
80333 München (DE)**

(54) **LENS MOLD MANUFACTURING METHOD**

(57) The present invention relates to a method of manufacturing a lens casting mold by introducing a forming mold, with a forming surface on which is positioned a glass material being formed, into a continuous heating furnace and conducting thermal treatment while conveying the forming mold to form an upper surface of the glass material being formed into a shape of a molding surface for forming a surface comprising a progressive surface. The method of manufacturing a lens casting mold of the present invention comprises controlling a temperature of the continuous heating furnace so that the continuous heating furnace comprises a temperature rising region having a temperature distribution such that the temperature rises in a conveyance direction of the forming mold; utilizing a forming mold having a curvature distribution on the forming surface as the forming mold; and conveying the forming mold in the temperature rising region so that a portion with the largest curvature on the forming surface is comprised in a portion on a side of the conveyance direction as divided in two by an imaginary line, the imaginary line running orthogonally to the conveyance direction of the forming mold and passing through a geometric center of the forming surface.

[Fig. 3]

**Description**

CROSS-REFERENCE TO RELATED APPLICATIONS

This application claims the benefit of priority to Japanese Patent Application Nos. 2008-020860, 2008-020875, and 2008-020921 filed on January 31, 2008, which are expressly incorporated herein by reference in their entirety.

TECHNICAL FIELD

The present invention relates to a method of manufacturing a lens casting mold by hot sag forming method.

TECHNICAL BACKGROUND

Methods of forming glass molds for eyeglass lenses include employing mechanical grinding and polishing methods, mechanical grinding methods, and electrical processing methods such as electrical discharge processing to produce a heat-resistant base mold, bringing this base mold into contact with a glass blank softened by heating to transfer the surface shape of the base mold, employing a grinding program for each surface shape to be obtained, and forming a base mold having a corresponding surface shape.

In recent years, the demand has increased for multifocal eyeglass lenses being made thinner and lighter by incorporation of axially symmetric, aspherical lens design. The hot sag molding method has been proposed (see Japanese Unexamined Patent Publication (KOKAI) Heisei Nos. 6-130333 and 4-275930, which are expressly incorporated herein by reference in their entirety) as a method for forming molds to produce eyeglass lenses having such complex shapes.

In the hot sag forming method, a glass material is placed on a mold, and softened by being heated to a temperature greater than or equal to its softening point, causing it to tightly contact with the mold. The shape of the mold is thus transferred to the upper surface of the glass material, yielding a formed article of desired surface shape. The glass material can be heated in a batch-type heating furnace or continuous heating furnace, but to achieve production efficiency, continuous heating furnaces are widely employed.

As the object being heated is being conveyed within a continuous heating furnace, it is possible to continuously conduct a series of processes within the furnace in the form of a temperature-rising step, an elevated temperature-maintaining step, a temperature-lowering step and the like by controlling the temperature within the furnace so as to impart a prescribed temperature distribution in the conveyance direction. However, in a continuous heating furnace, the amount of change in various parts of the surface of the object being heated tends to be nonuniform due to the presence of the temperature distribution in the conveyance direction, as stated above. For example, when a glass material is formed by the hot sag forming method in a continuous heating furnace having a temperature distribution such that the temperature rises from the inlet to the outlet, the glass material heats up rapidly and the amount of deformation increases greater at the front part. When the amount of deformation varies with the position of the glass material in this manner, the timing at which the lower surface of the glass material contacts the forming surface of the mold varies greatly with position, producing astigmatism that is undesirable in eyeglass correction and sometimes compromising the sensation created by wearing the eyeglass because the deviation from the design value is asymmetric.

In contrast, Japanese Unexamined Patent Publication (KOKAI) Showa No. 63-306390, which is expressly incorporated herein by reference in its entirety, proposes increasing the uniformity of heating by rotating the object being heated within the furnace in the course of sintering, metallizing, joining by brazing, and the like a ceramic product in a continuous heating furnace. However, when the glass material is rapidly rotated during softening in the course of molding a glass material by the hot sag forming method, there is a risk of reducing molding precision.

DISCLOSURE OF THE INVENTION

Accordingly, it is an object of the present invention to provide an eyeglass lens casting mold permitting the molding of an eyeglass lens affording a good wear sensation by the hot sag forming method in a continuous heating furnace.

The present inventors conducted extensive research into achieving the above object, resulting in the following discovery.
Among multifocal eyeglass lenses, progressive dioptric power lenses having a progressive surface the dioptric power of which changes continuously from top to bottom are widely employed as lenses for both distant and near viewing. Within the progressive surface, the curvature of the portion for near portion is great (the curve is deep), and the curvature of the far portion is small (the curve is shallow). Accordingly, the molding surface of the mold for forming the progressive surface also has a great degree of curvature in the portion for molding the near portion, and a small degree of curvature in the portion for molding the far portion. Moreover, in the forming surface of the forming mold for forming the above molding surface of the mold by the hot sag forming method, the curvature of the portion corresponding to the portion of the molding surface of the mold for molding the near portion is great and the curvature of the portion corresponding to the portion for molding the far portion is small.

Accordingly, the present inventors utilized these shape characteristics and the nonuniformity of heating in a continuous heating furnace, and discovered that it was possible to control deformation due to heat softening and readily form a forming surface of a mold by conveying the forming mold (on the forming surface of which the glass material is positioned) with the side corresponding to the portion for molding the near portion in front and the side corresponding to the portion for molding the far portion in the rear in the region in which the temperature rises in the conveyance direction of the forming mold within a continuous heating furnace. This is because the amount of deformation is great on the side for molding the near portion and the amount of deformation is small on the side for molding the far portion when forming a progressive surface by the hot sag forming method. Thus, it is possible to control the amount of deformation by utilizing the temperature distribution within the furnace by positioning the side corresponding to the portion for molding the near portion that is to undergo great deformation on the high temperature side.

The present invention was devised on the basis of this discovery.

The present invention relates to a method of manufacturing a lens casting mold by introducing a forming mold, with a forming surface on which is positioned a glass material being formed, into a continuous heating furnace and conducting thermal treatment while conveying the forming mold in the furnace to form an upper surface of the glass material being formed into a shape of a molding surface for forming a surface comprising a progressive surface, comprising:

controlling a temperature of the continuous heating furnace so that the continuous heating furnace comprises a temperature rising region having a temperature distribution such that the temperature rises in a conveyance direction of the forming mold;
utilizing a forming mold having a curvature distribution on the forming surface as the forming mold; and
conveying the forming mold in the temperature rising region so that a portion with the largest curvature on the forming surface is comprised in a portion on a side of the conveyance direction as divided in two by an imaginary line, the imaginary line running orthogonally to the conveyance direction of the forming mold and passing through a geometric center of the forming surface.

The conveying in the temperature rising region may be conducted such that a direction at which an average curvature from the geometric center toward a rim portion is the largest on the forming surface is approximately identical to the conveyance direction.

The temperature of the continuous heating furnace may be controlled so as to comprise, from a forming mold introduction inlet side, the temperature rising region, a constant temperature maintenance region, and a cooling region in this order.

The above manufacturing method may comprise subjecting the forming mold to rotation and fluctuation.

The fluctuation angle and amplitude in the rotation and fluctuation may be determined based on an added dioptric powder and/or an inset amount.

In the rotation and fluctuation, the fluctuation angle may range from ±5 to 45° relative to the conveyance direction and the amplitude may range from 0.01 11 Hz.

The above manufacturing method may comprise, in the constant temperature maintenance region, rotating the forming mold so that a portion with the largest curvature on the forming surface is comprised in a portion on an opposite side from the side in the conveyance direction as divided in two by an imaginary line running orthogonally to the conveyance direction of the forming mold and passing through a geometric center of the forming surface.

The temperature of the glass material being formed that is positioned on the forming mold being conveyed in the constant temperature maintenance region may be equal to or higher than a glass transition temperature of the glass.

In one embodiment, the surface comprising a progressive surface may be a compound surface comprised of a toric surface and a progressive surface. In this embodiment, the forming mold may comprise, on the imaginary line, two points where a curvature reaches maxima on the line, with the two points being positioned opposite each other and roughly equidistant from the geometric center; and the above method may further comprise utilizing a continuous heating furnace comprising a lateral heating region in which heat sources are disposed on two lateral surfaces as the continuous heating furnace and conveying the forming mold in the lateral heating region so that the imaginary line and the conveyance direction of the forming mold are roughly orthogonal.

The lateral heating region may be a region in which the glass material being formed is heated to a temperature equal to or higher than a glass transition temperature of the glass.

As the glass material being formed, a glass with a lower surface being a spherical surface, a planar surface, or an aspherical surface with centro symmetry, a glass having upper and lower surfaces being spherical, or a glass having one of the above shape and comprising astigmatic (toric) component on the upper surface thereof may be utilized.

The present invention permits the manufacturing with high production efficiency of lens casting molds capable of molding eyeglass lenses affording an excellent wear sensation.

BEST MODE FOR CARRYING OUT THE INVENTION

The present invention relates to relates to a method of manufacturing a lens casting mold by introducing a forming mold, with a forming surface on which is positioned a glass material being formed, into a continuous heating furnace and conducting thermal treatment while conveying the forming mold in the furnace to form an upper surface of the glass material being formed into a shape of a molding surface for forming a surface comprising a progressive surface (referred to as "Aspect I", hereinafter). Aspect I comprises controlling a temperature of the continuous heating furnace so that the continuous heating furnace comprises a temperature rising region having a temperature distribution such that the temperature rises in a conveyance direction of the forming mold; utilizing, as the forming mold, a forming mold having a curvature distribution on the forming surface; and conveying the forming mold in the temperature rising region so that a portion with the largest curvature on the forming surface is comprised in a portion on a side of the conveyance direction as divided in two by an imaginary line, the imaginary line running orthogonally to the conveyance direction of the forming mold and passing through a geometric center of the forming surface.

The casting mold manufactured by Aspect I can be used to mold progressive dioptric power lenses. The term "progressive dioptric power lenses" refers to lenses having a progressive surface comprising a far portion and a near portion, in which the dioptric power changes progressively from the far portion to the near portion. Progressive dioptric power lenses include convex (exterior) progressive dioptric power lenses, in which the progressive surface is disposed within a convex surface, and concave (interior) progressive dioptric power lenses, in which the progressive surface is disposed within a concave surface. Convex progressive dioptric power lenses have a progressive surface within a convex surface and achieve progressive dioptric power by means of the shape of the convex optical surface. Concave progressive dioptric power lenses are similar, with the exception that they are concave instead of convex. The progressive dioptric power lens that can be molded by a casting mold manufactured according to the present invention can be either of these embodiment.

In the present invention, the lens casting mold is manufactured by the hot sag forming method.

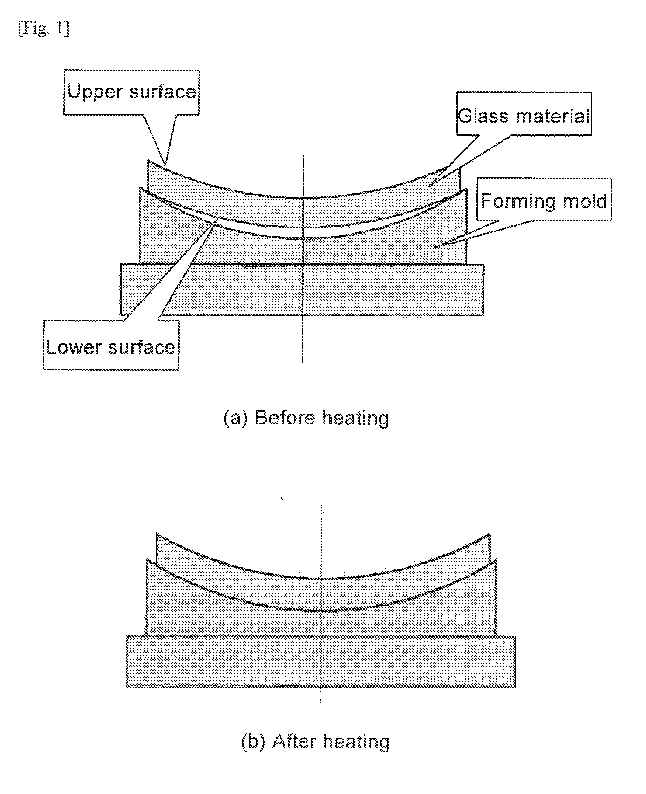

Fig. 1 shows a descriptive drawing of the hot sag forming method.
Normally, in the hot sag forming method, the glass material being formed is subjected to thermal treatment while positioned on the forming mold in a state where the center of the lower surface of the glass material is separated from the forming surface of the forming mold (Fig. 1(a)). Thus, the lower surface of the glass material being formed deforms under its own weight, coming into tight contact with the forming surface of the forming mold (Fig. 1(b)) and causing the shape of the forming surface of the forming mold to be transferred to the upper surface of the glass material. As a result, the upper surface of the glass material can be formed into a desired shape. A casting mold that is thus manufactured can be used as the upper or lower mold of a mold for manufacturing plastic lenses by the casting polymerization method. More specifically, an upper mold and a lower mold can be assembled by means of a gasket or the like into a mold such that the upper surface of a glass material being formed by the hot sag forming method is positioned within the mold, and a plastic lens starting material liquid can be cast into the cavity of the mold and caused to polymerize, yielding a lens with a progressive surface.

In the progressive surface, the curvature of the near portion is maximum (the radius of curvature is minimum), and the curvature of the far portion is minimum (the radius of curvature is maximum). Accordingly, the curvature of the portion for molding the near portion is also maximum and the curvature of the portion for molding the far portion is also minimum in the molding surface of the casting mold (the surface positioned within the cavity of the forming mold during casting polymerization). In the forming surface of the forming mold for use in the hot sag forming method for manufacturing the above casting mold, the curvature is also maximum in the portion corresponding to the portion for molding the near portion (the portion for molding the upper surface of the glass material into the portion for molding the near portion), and the curvature is also minimum in the portion corresponding to the portion for molding the near portion (the portion for molding the upper surface of the glass material into the portion for molding the far portion). That is, the forming mold has a curvature distribution on the forming surface, with at least a portion of the forming surface having different curvatures at any two points. In order to bring the forming surface of the forming mold of varying curvature within the surface in this manner into tight contact with the lower surface of the glass material being formed, the portion that is to be brought into tight contact with the portion corresponding to the portion for molding the near portion is desirably caused to deform greatly, and the portion that is to be brought into tight contact with the portion corresponding to the portion for molding the far portion is desirably caused to deform only a little.

Accordingly, in Aspect I, the temperature of the continuous heating furnace is controlled so that the continuous heating furnace comprises a temperature rising region having a temperature distribution such that the temperature rises in the conveyance direction of the forming mold, and the forming mold is conveyed in the temperature rising region so that a portion with the largest curvature on the forming surface, that is, the portion that is desirably deformed greatly to bring into tight contact with the forming surface, is comprised in a portion on a side of the conveyance direction as divided in two by an imaginary line, the imaginary line running orthogonally to the conveyance direction of the forming mold and passing through a geometric center of the forming surface. In the above-cited method described in Japanese Unexamined Patent Publication (KOKAI) Showa No. 63-306390, the object being heated is rotated to achieve a uniform heating state to counter heating nonuniformity due to the temperature distribution in a continuous heating furnace. In contrast, in Aspect I, the nonuniformity in heating within a continuous heating furnace is utilized to intentionally change the amount of heating deformation within a single object being heated, thereby permitting the mass production of casting molds for progressive dioptric power lenses with good production efficiency.

One embodiment of Aspect I is a method of manufacturing a lens casting mold (also referred to as "Aspect II", hereinafter) for molding lenses having a surface comprising a progressive surface in the form of compound surface comprised of a toric surface and a progressive surface. That is, Aspect II relates to a method of manufacturing a lens casting mold for molding lenses having a compound surface comprised of a toric surface and a progressive surface.

Aspect II comprises introducing a forming mold, with a forming surface on which is positioned a glass material being formed, into a continuous heating furnace and conducting thermal treatment while conveying the forming mold in the furnace to form an upper surface of the glass material being formed into a shape of a molding surface for forming the above compound surface, further comprises:

utilizing, as the forming mold, a forming mold comprising a forming surface having a curvature distribution within the surface thereof, and comprising, on an imaginary line passing through a geometric center, two points where a curvature reaches maxima on the line, with the two points being positioned opposite each other and roughly equidistant from the geometric center,

utilizing a continuous heating furnace comprising a lateral heating region in which heat sources are disposed on two lateral surfaces as the continuous heating furnace, and controlling a temperature of the continuous heating furnace so that the continuous heating furnace comprises a temperature rising region having a temperature distribution such that the temperature rises in a conveyance direction of the forming mold,

conveying the forming mold in the lateral heating region so that the imaginary line and the conveyance direction of the forming mold are roughly orthogonal, and

conveying the forming mold in the temperature rising region so that a portion with the largest curvature on the forming surface is comprised in a portion on a side of the conveyance direction as divided in two by the imaginary line.

Eyeglass lenses having a compound surface comprised of a toric surface and a progressive surface the dioptric power of which changes continuously from top to bottom have been developed in recent years. In the progressive surface of such an eyeglass lens, as set forth above, the curvature of the near portion is great (the curve is deep) and the curvature of the far portion is small (the curve is shallow), Accordingly, in the molding surface of a mold for forming a progressive surface, the curvature of the portion for forming the near portion is great and the curvature of the portion for forming the far portion is small. Moreover, in the forming surface of a forming mold for molding the above molding surface of the mold by the hot sag forming method, the curvature is great in the portion corresponding to the portion for forming the near portion of the molding surface of the mold, and the curvature is small in the portion corresponding to the portion for molding the far portion.

Additionally, in the above eyeglass lens, two points of maximum curvature are located at positions that are symmetric about the main meridian in the toric surface. The curve is deepest on the main meridian at the two points of maximum curvature on the main meridian. In the molding surface of a mold for forming such a toric surface, two points of maximum curvature are located at symmetric positions on an axis corresponding to the main meridian. Still further, in the forming surface of a forming mold for molding the molding surface of the above mold by the hot sag forming method, two points of maximum curvature are located at symmetric positions on an axis corresponding to the main meridian in the same manner as in the molding surface of the mold. That is, an axis positioned symmetrically with respect to two points of maximum curvature based on the geometric center is present on the above forming surface of a forming mold.

The present inventors exploited the nonuniformity in a continuous heating furnace and the shape characteristics of the forming surface of a forming mold for forming a progressive surface, as set forth above. They discovered that by conveying the forming mold (with the glass material positioned on the forming surface thereof) so that the side corresponding to the portion for molding the near portion was in front and the side corresponding to the portion for molding the far portion was to the rear in the region in which the temperature rose in the conveyance direction of the forming mold in a continuous heating furnace, it was possible to control deformation due to heat softening and readily form a molding surface of a mold.

Further, the present inventors utilized the shape characteristics of the forming surface of a forming mold for forming a toric surface, and discovered that deformation due to heat softening could be controlled and a molding surface of a mold could be readily formed by passing a forming mold on which a glass material to be formed was positioned through a continuous heating furnace with heat sources positioned on two lateral surfaces thereof such that the above axis corresponding to the main meridian is roughly orthogonal to the conveyance direction. For example, since the deformation occurs more rapidly on the side in the conveyance direction (high temperature side) in a continuous heating furnace having a temperature distribution such that the temperature increases from the inlet to the outlet, the timing of tight contact with the forming surface of the forming mold varies greatly with the position of the lower surface of the glass material when attempting to form a glass material to be formed positioned on the forming surface of the above-described shape. Astigmatism that is undesirable for corrective eyeglasses occurs and the sensation created by wearing the eyeglass is sometimes compromised because the deviation from the design value is asymmetric. In contrast, by providing a region in which heat sources are positioned on the two lateral surfaces in a continuous heating furnace and conveying the forming mold so that the conveyance direction is roughly orthogonal to the above axis in this region, it is possible to uniformly heat on the left and right the portion to be subjected to great deformation, making it possible to match the timing of tight contact between the lower surface of the glass material and the forming surface of the forming mold at the various portions within the surface.

Aspect II was devised based on the above discovery.

As set forth above, Aspect II manufactures by the hot sag forming method a casting mold for eyeglass lenses having a compound surface comprised of a toric surface and a progressive surface. An example of an eyeglass lens having a compound surface comprised of a toric surface and a progressive surface is a progressive dioptric powder lens, both surfaces of which are aspherical. Such an eyeglass lens comprises a compound surface of axially symmetric shape containing a torus and an asymmetric shape containing a progressive element. For example, the compound surface has a shape that is right-left symmetric about an axis passing through the main meridian, but is of varying curvature and is not symmetric in the direction of the meridian. For example, the convex surface of a progressive dioptric power lens, both surfaces of which are aspherical, has a shape that is axially symmetric about a meridian passing through the geometric center, with the sagittal height of the position furthest removed from the meridian being such that the curvature increases in the direction of the meridian, but decreases in the opposite direction in an asymmetric shape. In other words, it is right-left symmetric with respect to the main meridian, comprising a shape with a large curvature corresponding to the dioptric power for near viewing along just one side on the main meridian.

In Aspect II, in a forming mold having a forming surface for forming the above compound surface, the direction of maximum curvature that is axially symmetric and the maximum curvature that is asymmetric are each specified, and the conveyance direction of the forming mold is determined in a manner corresponding to the base positions that have been specified. The conveyance method will be described in detail further below.

A lens having the above compound surface has two points of maximum curvature at symmetric positions (positions that are approximately equidistant from the geometric center) on the main meridian in the toric surface. That is, two points at which the curve is deepest are present at symmetric positions on the main meridian. As set forth above, two points of maximum curvature are present at symmetric positions on an axis corresponding to the main meridian on the molding surface of a mold for forming a toric surface. Moreover, in the forming surface of a forming mold for molding the above molding surface of the mold by the hot sag forming method, two points of maximum curvature are also present at symmetric positions on an axis corresponding to the main meridian in the same manner as on the molding surface of the mold. That is, when envisioning the presence of an imaginary line passing through the geometric center of the above forming surface of a forming mold, two points of maximum curvature are present at opposing positions that are nearly equidistant from the geometric center on the imaginary line. To bring the lower surface of the glass material being formed into tight contact with the forming surface of the forming mold of varying curvature within the surface thereof, as set forth above, requires that the portion of great curvature and the portion to be brought into close contact be caused to greatly deform.

Accordingly, in Aspect II, the symmetry of the forming surface of the forming mold is utilized, a region is provided within which heat sources are positioned on the two lateral surfaces within a continuous heating furnace, and the forming mold is conveyed so that the conveyance direction of the forming mold in this region is roughly orthogonal to the above imaginary line. Thus, it becomes possible to uniformly deform by heating two points on a single axis that are to be greatly deformed.

In Aspect II, deformation control is conducted in the toric surface as set forth above. Additionally, deformation control is conducted in the progressive surface as set forth above. Thus, based on Aspect II, by controlling deformation due to heating in the toric surface and progressive surface, respectively, it is possible to achieve uniformity of timing of tight contact between the lower surface of the glass material and the forming surface of the forming mold. When the timing of tight contact between the lower surface of the glass material and the forming surface varies greatly in various parts of the surface, astigmatism that is unwanted in eyeglass correction occurs, deviation from the design value becomes asymmetric, and the sensation created by wearing the eyeglass is sometimes compromised. In contrast, Aspect II makes it possible to obtain a casting mold capable of molding eyeglass lenses affording an excellent wear sensation.

The method of manufacturing a lens casting mold of the present invention is described in greater detail below.

[Glass material being formed]

The glass material the upper surface of which is formed by being passed through a continuous heating furnace in the present invention is desirably a glass material with a lower surface being a spherical surface, a planar surface, or an aspherical surface with centrosymmetry. The reason for this is that since the lower surface of a glass material that is spherical in shape, for example, has a surface of constant curvature, the difference in the amount of deformation within the surface is particularly pronounced in the course of bringing it into tight contact with the forming surface of a forming mold of varying curvature within the surface. The same applies to a glass material with a lower surface that is planar and an aspherical surface with centrosymmetry. In such cases, as set forth above, the present invention makes it possible to control the amount of deformation caused by heating of the glass material in a continuous heating furnace. Further, the glass material being formed is desirably one comprising an astigmatic (toric) component on the upper surface in addition to having the above-described lower surfaces shape.

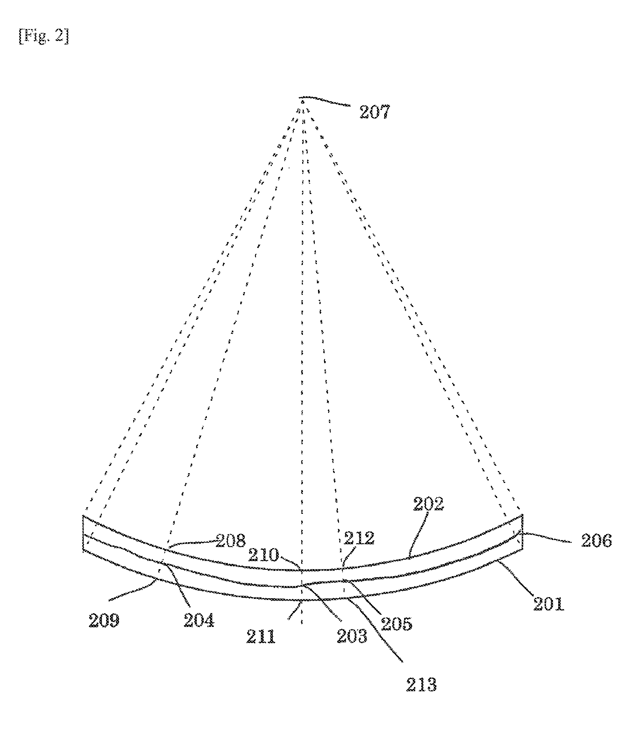

Details of the lower surface shape of the glass material being formed are as set forth above. By contrast, the upper surface shape of the glass material being formed is not specifically limited, and can be any of shape, such as spherical, planar, or aspherical surface. The glass material being formed preferably has upper and lower surfaces being spherical. The glass material having a constant curvature on both upper and lower surfaces can readily processed and thus using a glass material with such shape is advantageous to increased productivity. The glass material used is preferably a glass material having convex and concave surfaces being spherical as well as being of equal or essentially equal thickness in the normal direction. In this context, the phrase "essentially equal thickness in the normal direction" means that at at least the geometric center of the glass material, the degree of change in thickness as measured in the normal direction is less than or equal to 1.0 percent, preferably less than or equal to 0.8 percent. Fig. 2 shows a schematic sectional view of such glass.

In Fig. 2, glass material 206 has a meniscus shape with concave and convex surfaces, the external shape being round. The surface shapes of the concave surface 202 and the convex surface 201 of the glass material are both spherical.

The term "normal direction" of the two surfaces of the glass material means the direction that is perpendicular to the glass material surface at any position on the surface of the glass material. Accordingly, the normal direction changes at each position on the surface. For example, direction 204 in Fig. 2 denotes the normal direction at point 208 on the concave surface of the glass material. The points of intersection or normal direction 204 with the concave and convex surfaces are 208 and 209, respectively. Thus, the interval between 208 and 209 is the thickness in the normal direction. There are other positions on the concave glass surface, such as 210 and 212, the normal directions of which are 203 and 205, respectively. In normal direction 203, the interval between 210 and 211, and in normal direction 205, the interval between 212 and 213, is the thickness in the normal direction. In a glass material of equal thickness in the normal direction, this spacing between the upper and lower surfaces in the normal direction is a constant value. That is, in glass materials of equal thickness in me normal direction, the upper and lower surfaces are parts of a spherical surface sharing a single center (207 in Fig. 1).

The glass material having the above-described approximately round shape has a shape that is center symmetric at the geometric center thereof. Additionally, since the forming surface of the forming mold has a shape corresponding to a formed article (casting mold), the shape is asymmetric, with the curvature being large in portions corresponding to portions for molding near portions and the curvature being small in portions corresponding to portions for molding far portions. As set forth above, the present invention utilizes the peculiar temperature nonuniformity of a continuous heating furnace in which the temperature rises in the direction of advance of an object being processed. In heat softening processing, positions at which the glass material undergoes high levels of shape change are disposed in the high temperature direction, making it possible to readily form progressive surfaces of complex surface shape with various curvature within the surface. As described in WO 2007/058353A1, which is expressly incorporated herein by reference in its entirety, when the glass material approximates a viscoelastic material, the thickness of the glass in the normal direction before and after heat softening in the hot sag forming method essentially does not change. Thus, the use of a glass material that is of equal thickness in the normal direction is advantageous in that it facilitates control of the shape during softening by heating.

In order to approximate a glass material to a viscoelastic material, it is desirable for the outer diameter of the glass material to be adequately large relative to the thickness in the normal direction of the glass material, and for the outer diameter of the glass material to be adequately large relative to the amount of distortion in a direction perpendicular to the glass. Specifically, for the glass material employed in the present invention, it is desirable for the thickness in the normal direction to be 2 to 10 mm, preferably 5 to 7 mm. Further, the outer diameter of the glass material is desirably 60 to 90 mm, preferably 65 to 86 mm. The "outer diameter" of the glass material is the distance between any point on the lower surface edge rim portion of the glass material and the opposite point on the edge rim.

The glass material is not specifically limited. Glasses such as crown-based, flint-based, barium-based, phosphate-based, fluorine-containing, and fluorophosphate-based glasses are suitable. In a first example, suitable glass is

glass comprising $SiO_2$, $B_2O_3$, and $Al_2O_3$ as the structural components and having the glass material composition of, given as molar percentages, 45 to 85 percent $SiO_2$, 4 to 32 percent $Al_2O_3$, 8 to 30 percent $Na_2O + Li_2O$ (with $Li_2O$ constituting equal to or less than 70 percent of $Na_2O + Li_2O$), the total quantity of ZnO and/or $F_2$ being 2 to 13 percent (where $F_2 < 8$ percent), $Li_2O + Na_2O/Al_2O_3$ being 2/3 to 4/1, and $SiO_2 + Al_2O_3 + Na_2O + Li_2O + ZnO + F_2 > 90$ percent.

In a second example, suitable glass are glass having the glass material composition of, given as molar percentages, 50 to 76 percent $SiO_2$, 4.8 to 14.9 percent $Al_2O_3$, 13.8 to 27.3 percent $Na_2O + Li_2O$ (where $Li_2O$ is less than or equal to 70 percent of $Na_2O + Li_2O$), the total quantity of ZnO and/or $F_2$ being 3 to 11 percent (where $F_2 < 8$ percent), $Li_2O + Na_2O/AlO_3$ being 2/3 to 4/1, and $SiO_2 + Al_2O_3 + Li_2O + Na_2O + Li_2O + ZnO + F_2 > 90$ percent.

In a third example, a further suitable glass composition is: $SiO_2$ (63.6 percent), $Al_2O_3$ (12.8 percent), $Na_2O$ (10.5 percent), $B_2O_3$ (1.5 percent), ZnO (6.3 percent), $Li_2O$ (4.8 percent), $As_2O_3$ (0.3 percent), $Sb_2O_3$ (0.2 percent). Other metal oxides, such as MgO, PbO, CdO, $B_2O_3$, $TiO_2$, and $ZrO_2$; coloring metal oxides; and the like may be added to stabilize the glass, facilitate melting, and impart color, so long as they do not exceed 10 percent.

As further characteristics of the glass material, for example, suitable thermal properties are: a distortion point of 450 to 480°C, an annealing point of 480 to 621°C, a softening point of 610 to 770°C, a glass transition temperature (Tg) of 450 to 620°C, a yield point (Ts) of 535 to 575°C, a specific gravity of 2.47 to 3.65 (g/cm$^3$), a refractive index, Nd, of 1.52300 to 1.8061, a thermal diffusion rate of 0.3 to 0.4 cm$^2$ * main, a Poisson ratio of 0.17 to 0.26, a photoelasticity constant of 2.82 x 10E-12, a Young's modulus of 6,420 to 9,000 kgf/mm$^2$, and a coefficient of linear expansion of 8 to 10 x 10E-6/°C. In particular, a glass material with a distortion point of 460°C, an annealing point of 490°C, a softening point of 650°C, a glass transition temperature (Tg) of 485°C, a yield point (Ts) of 535°C, a specific gravity of 2.47 (g/cm$^3$), a refractive index, Nd, of 1.52300, a thermal diffusion rate of 0.3576 cm$^2$ * min, a Poisson ratio of 0.214, a photoelasticity constant of 2.82 x 10E-12, a Young's modulus of 8,340 kgf/mm$^2$, and a coefficient of linear expansion of 8.5 x 10E-6/°C is particularly preferred.

[Conveyance direction of the forming mold in the lateral heating region]

Normally, the heat sources of a continuous heating furnace are disposed above and/or beneath the conveyance route of the object being heated. In contrast, a region (lateral heating region) in which heat sources are disposed on two lateral surfaces can be provided in the present invention. This region is desirably a region where the glass undergoes softening and deformation, and preferably a region in which the glass material being formed is heated to or above the glass transition temperature of the glass. In the present invention, the temperature is desirably controlled so that a temperature rising region, constant temperature maintenance region, and cooling region are disposed in that order in a continuous heating furnace. The glass material can be continuously thermally processed by causing it to pass through this series of regions. In this case, the lateral heating region can be used at a minimum as a temperature rising region, is desirably employed as a temperature rising region and constant temperature maintenance region, and is preferably employed as the entire region within the furnace, comprising a temperature rising region, constant temperature maintenance region, and cooling region.

In Aspect II, the forming mold is conveyed through the lateral heating region along a conveyance direction that is roughly orthogonal to an imaginary line that passes through the geometric center on the forming surface of the forming mold and that comprises two points where the curvature of the line reaches maxima, with the two points being positioned opposite each other and roughly equidistant from the geometric center. The casting mold for eyeglass lenses that is manufactured according to Aspect II is for molding an eyeglass lens having a compound surface comprised of a tone surface and a progressive surface. The tone surface comprises two points where the curvature reaches maxima that are positioned symmetrically on the main meridian. A straight line that is transferred to the main meridian is present on the molding surface of the casting mold for molding the toric surface. Also present on the forming surface of the forming mold for forming the molding surface of the casting mold is a straight line corresponding to the straight line that is transferred to the main meridian; that is, a line corresponding to the main meridian of the toric surface of the eyeglass lens. The above imaginary line is a line corresponding to the main meridian of the toric surface of the eyeglass lens. By passing through the lateral heating region in such a manner that the imaginary line and the conveyance direction are orthogonal to each other, it is possible to effect uniform heating at the two spots where the curve is deep, making it possible to achieve uniform in-surface timing of tight contact between the lower surface of the glass material and the forming surface of the forming mold. In the present invention, the phrase "roughly equidistant from the geometric center" means that the distance from the geometric center is identical, and covers variations in distance of about equal to or less than 1 mm. The phrase "the imaginary line and the conveyance direction are roughly orthogonal" means that the angle formed by the imaginary line and the conveyance direction is equal to or less than 90° ± 5°. In Aspect II, it suffices for the conveyance direction to be the above direction within the lateral heating region. However, when operational properties are taken into account, it is desirable for the conveyance direction to assume the above direction upon introduction into the continuous heating furnace. Within the lateral heating region, it suffices for the period of conveyance to comprise a portion during which the imaginary line and the conveyance direction are not roughly orthogonal. However, it is desirable to keep this period to about 10 to 15 percent in order to control deformation. It is desirable for this period to come within the constant temperature maintenance region, and preferably for it to come within a region of heating to equal to or higher than Tg.

For example, the imaginary line is a straight line corresponding to a right-left symmetric axis in the direction of maximum curvature of the eyeglass lens on the forming surface of the forming mold. It can also be specified by measurement of the three-dimensional shape of the forming surface of the forming mold. This will be described in detail further below.

In the lateral heating region, the heat sources positioned on the lateral surfaces of the heating furnace may be in the form of surface or rod-shaped heaters arranged in a vertical or horizontal parallel surface configuration, with one or more heaters of equal or greater height than the object being heated, being disposed horizontally in the direction of the lateral surfaces of the object being heated. The temperature of heating by the heat sources on the two lateral surfaces is preferably controlled by one or more heater zones disposed in the direction of advance or the direction of height to conduct heating from the two lateral surfaces under identical conditions, from the perspective of increase of the uniformity of heating.

[Conveyance direction of the forming mold in the temperature rising region]

In the present invention, the forming mold is conveyed so that the portion of maximum curvature on the forming surface is contained within the portion on the conveyance direction side as divided in two by an imaginary line that is orthogonal to the conveyance direction of the forming mold and passes through the geometric center of the forming surface in a temperature rising region having a temperature portion in which the temperature is raised in the conveyance direction of the forming mold within the continuous heating furnace. Conveying the glass material so that the portion to be subjected to the greatest deformation is positioned on the high temperature side within the furnace makes it possible to reduce variation in the timing of tight contact between the forming surface and the lower surface of the glass material and control deformation. When the timing at which the lower surface of the glass material and the forming surface are brought into tight contact varies considerably between various portions within the surface, astigmatism that is undesirable in eyeglass correction is produced, deviation from the design value becomes asymmetric, and the wear sensation of the eyeglass is sometimes compromised. In contrast, the present invention yields a casting mold capable of molding eyeglass lenses affording an excellent wear sensation.

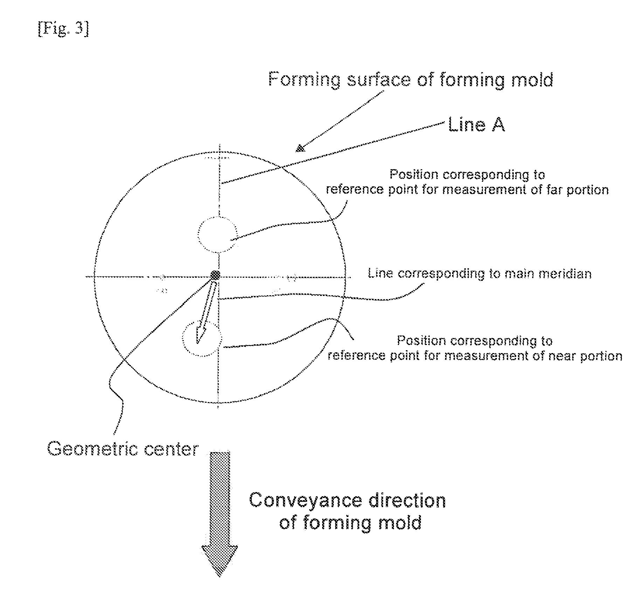

Portions where the curvature reaches maxima are portions on the forming surface of the forming mold corresponding to portions for molding the near portion. More specifically, they can be positions on the forming surface of the forming mold that correspond to a reference point for measurement of near portion.
JIS T7315, US T7313, and JIS T7330 specify reference points for measurement of the dioptric power as reference points for measurement of the refractive indexes of eyeglass lenses. The reference points for the measurement of dioptric power are portions that are enclosed by circles about 8.0 to 8.5 mm in diameter, for example, on the surface on the object side or on the eyeball side of an eyeglass lens. In an eyeglass lens that can be molded by the casting mold manufactured by the present invention, there are two dioptric power measurement reference points in the form of a reference point for measurement of far portion and a reference point for measurement of near portion. The intermediate region positioned between the reference point for measurement of far portion and the reference point for measurement of near portion in a progressive dioptric power lens is called the progression band. Within this band, the dioptric power varies progressively. The reference point for measurement of near portion is located at a position corresponding to the convergence of the eyeballs at a position either to the right or to the left of the main meridian, and is determined to be positioned either to the right or left of the main meridian based on the right and left partitioning of the eyeballs. When the glass material is formed into a casting mold by the hot sag forming method, the surface that was the upper surface of the glass material (the opposite surface from the surface in tight contact with the forming surface) is transferred to the eyeglass lens. The phrase "the position corresponding the reference point for measurement of dioptric power" of the forming surface of the forming mold refers to the portion coming into tight contact with the lower surface of the glass material, desirably opposing in the normal direction the portion of the upper surface of the glass material becoming the portion that is transferred to the reference point for measurement of dioptric power of the eyeglass lens on the surface of the casting mold that is manufactured. Fig. 3 shows an example of the arrangement of the "position corresponding to a reference point for measurement of far portion" and the "position corresponding to a reference point for measurement of near portion" on the forming surface of the forming mold.

As stated above, the forming mold is conveyed in the temperature rising region such that the portion at which the curvature is maximum on the forming surface is contained in the portion on the side of the conveyance direction as divided in two by the above-described imaginary line, orthogonal to the conveyance direction of the forming mold. For example, in the embodiment shown in Fig. 3, the portion of maximum curvature on the forming surface is contained at a position corresponding to the reference point for measurement of near portion. As shown in Fig. 3, when the line corresponding to the main meridian is aligned with the conveyance direction of the forming mold in the temperature rising region within a continuous heating furnace, the imaginary line that is orthogonal to the conveyance direction of the forming mold and passes through the geometric center of the forming surface becomes a straight line that is orthogonal to a line corresponding to the main meridian and passes through the geometric center of the forming surface (line A in Fig. 3). However, the present invention is not limited to embodiments in which conveyance is conducted such that the line corresponding to the main meridian is aligned with the conveyance direction of the forming mold in the temperature rising region. Desirably, conveyance in the temperature rising region is conducted such that a direction at which an average curvature from the geometric center toward a rim portion is the largest on the forming surface of the forming mold is approximately identical to the conveyance direction. The direction at which an average curvature from the geometric center toward a rim portion is the largest on the forming surface of the forming mold is, for example, in the embodiment shown in Fig. 3, the direction on the forming surface indicated by the white arrow; that is, the direction running from the geometric center toward a position corresponding to the reference point for measurement of near portion. Since this direction is the one in which the curve is the greatest on the forming surface, approximately aligning this direction with the conveyance direction in the temperature rising region is desirable to obtain a casting mold capable of molding an eyeglass lens affording a good wear sensation, The terms "approximately identical" and "approximately aligning" include cases differing by about $\pm$ 5°.

A first example of a method for determining the conveyance direction in the temperature rising region in a continuous heating furnace consists of calculating the direction of maximum curvature by three-dimensional shape measurement of the forming surface of the forming mold (Method 1). A second example is the method of specification from an eyeglass lens prescription based on the axis of astigmatism, the reference point for measurement of near portion and the reference point for measurement of far portion (Method 2). With Method 2, based on the design value of the forming surface of the forming mold and employing the axis of astigmatism as a reference, it suffices to determine the conveyance direction so that the position corresponding to the reference point for measurement of near portion is positioned on the high-temperature side in the temperature rising region.
Method 1 will be described below,

With Method 1, the approximate radius of curvature of the cross-section of a lens in a given direction is calculated from the coordinates of three or more points on a straight line passing through the geometric center of the forming surface of a forming mold. This calculation method is used to calculate the radii of curvature in all directions, and the minimal radius of curvature and its direction are specified based on the results. An approximate radius of curvature is calculated either by solving simultaneous equations for three points, or by calculating an approximate radius of curvature by the method of least squares from the coordinates of three or more points.

The surface shape of the forming surface of a forming mold can be represented by means of the numeric values of the heights of the individual squares of the square-shaped rows by dividing the height of the forming surface horizontally and vertically. The category of shape is that of a free curved surface, which includes progressive surface shapes. The B-spline function denoted by equation 1 below can be used to represent a free curved surface to represent the values of coordinates at any position.

[Numeral 1]

$$f(x,y) = \sum_{i=1}^{h+m} \sum_{j=1}^{k+m} c_{ij} N_{mi}(x) N_{mj}(y) \quad \text{(Equation 1)}$$

In equation 1, m denotes the order (m-1: degree) of the spline function; h and k denote numbers of nodal points - 2m of the spline function; cij denote coefficients; and Nmi(x) and Nmj(y) denote B-splines of the $m^{th}$ order. For details relating to spline functions, the reference "Series: New Applications of Mathematics 20, Spline Functions and Their Applications," by Kouzo ICHIDA and Fujiichi YOSHIMOTO, published by Kyoiku Shuppan, which is expressly incorporated herein by reference in its entirety, can be consulted.

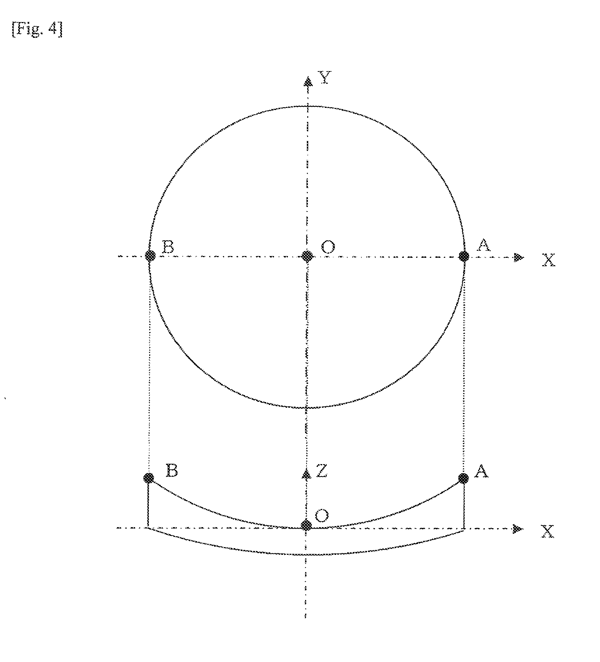

Calculation of the radius of curvature will be described next. A specific example of the method of calculation based on simultaneous equations will be given first.
As shown in Fig. 4, the coordinates of three points AOB lying on a straight line that passes through the geometric center of the forming surface of a forming mold and connects the two edges are employed to calculate the approximate radius of curvature of the cross-section from simultaneous equations of circles. When the three points employed in the calculation are denoted as A(X1, Y1), O(X2, Y2), and R(X3, Y3), as shown in Fig. 4, the value of the coordinates of the ZX cross-section become A(X1, Z1), O(X2, Z2), and B(X3, Z3). To obtain the equation of a circle passing through the three points AOB, the following simultaneous equations are solved. However, there is a necessary condition that the three points not lie on a straight line in the ZX cross-section. Denoting the values of the X and Z coordinates of the center of the circle as a and b, respectively, and the radius of the circle as r gives simultaneous equations in the form of equation 2 below.
[Numeral 2]

$$(X1-a)^2 + (Z1-b)^2 = r^2$$
$$(X2-a)^2 + (Z2-b)^2 = r^2 \quad \text{(Equation 2)}$$
$$(X3-a)^2 + (Z3-b)^2 = r^2$$

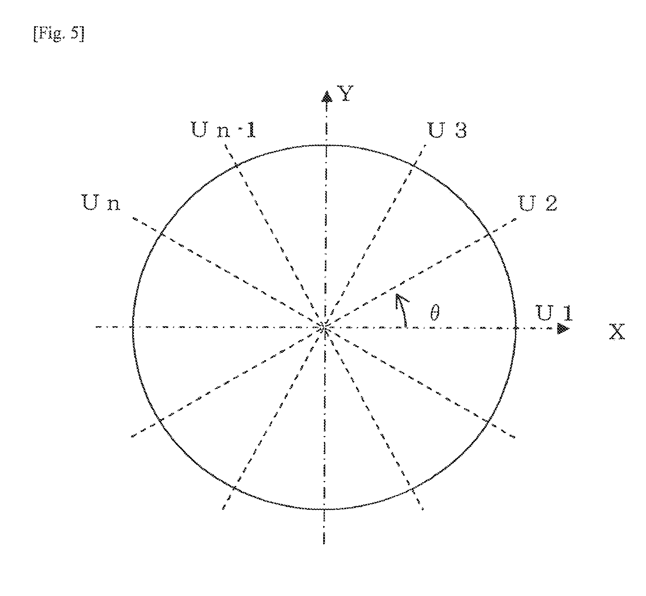

To determine the minimal radius of curvature and its direction, as shown in Fig. 5, an approximate radius of curvature is calculated for the cross-sections in directions U1, U2,... Un at a pitch of angle θ. Angle θ can be set to from 0.1 to 1°, for example.

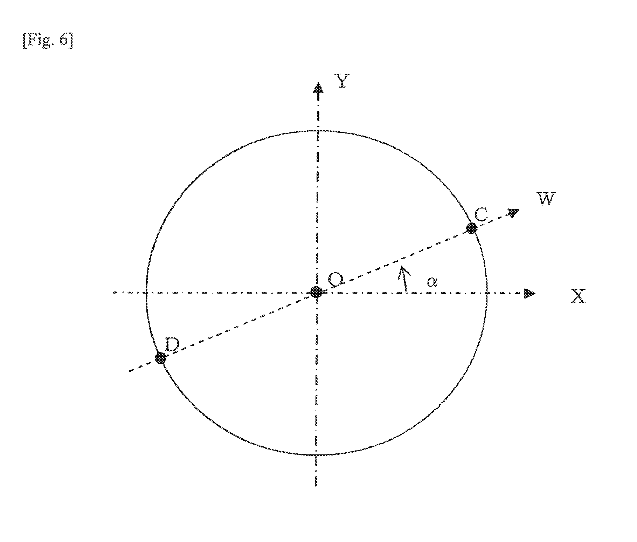

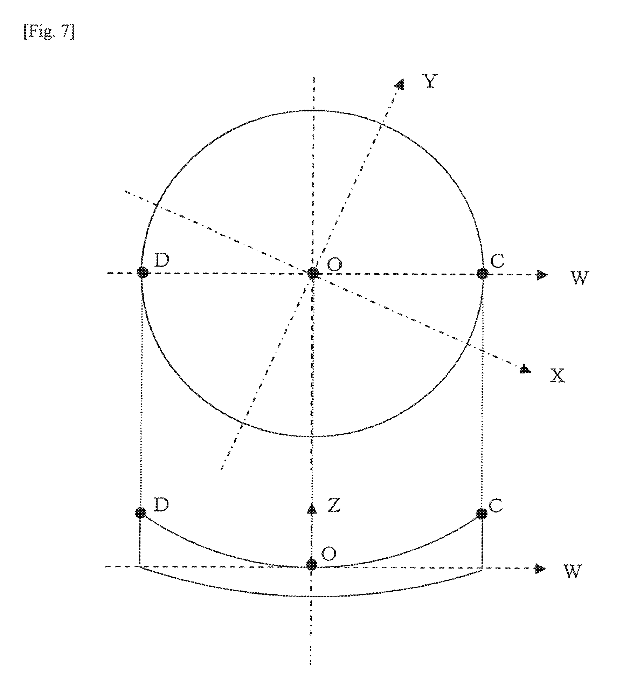

By contrast, as shown in Fig. 6, when the three points employed to calculate the direction of angle α are denoted as C(X1, Y1), O(X2, Y2), and D(X3, Y3), as shown in Fig. 7, the value of the coordinates of the ZW cross-section are given by C(W1, Z1), O(W2, Z2), and B(W3, Z3). The equation of a circle passing through the three points COD can be obtained by solving the simultaneous equations of equation 3 below. However, there is a condition that the three points not lie on a straight line in the ZW cross-section.

[Numeral 3]

$$(W1-a)^2 + (Z1-b)^2 = r^2$$
$$(W2-a)^2 + (Z2-b)^2 = r^2 \quad \text{(Equation 3)}$$
$$(W3-a)^2 + (Z3-b)^2 = r^2$$

In equations 2 and 3 above, a and b denote the values of coordinates W and Z, respectively, of the center of the circle; r denotes the radius of the circle; and the coordinate values W1, W2, and W3 denote identical values in all directions. Accordingly, Z1, Z2, and Z3 become as shown in equation 4 based on the B-spline function.

[Numeral 4]

$$Z1 = f(X1, Y1)$$
$$Z2 = f(X2, Y2) \quad \text{(Equation 4)}$$
$$Z3 = f(X3, Y3)$$

As an example, Table 1 shows examples of the calculation of radii of curvature in a total of 18 directions at an individual axis pitch of 10 degrees in a progressive surface using the above-described method. In Table 1, P1, P2, and P3 denote coordinate values on the axes, and the axis direction denotes the "angle (deg) formed with the X-axis direction by the cross-section being calculated." From Table 1, it is possible to specify that the direction of 60 degrees is the direction of maximal curvature (the direction of the smallest radius of curvature).

[Table 1]

| Angle (deg) formed with the X-axis direction by the cross-section being calculated | Coordinate value at P1 point (mm) | | | Coordinate value at P2 point (mm) | | | Coordinate value at P3 point (mm) | | | Radius of curvature at Pn point (mm) | Curvature at Pn point (1/mm) |
|---|---|---|---|---|---|---|---|---|---|---|---|
| | X | Y | Z | X | Y | Z | X | Y | Z | | |
| 0 | 35 | 0 | 7. 36 | 0 | 0 | 0 | −35 | 0 | 6. 78 | 90. 18 | 1. 109E−02 |
| 10 | 34. 47 | 6. 08 | 7. 4 | 0 | 0 | 0 | −34. 5 | −6. 08 | 6. 94 | 88. 98 | 1. 124E−02 |
| 20 | 32. 89 | 11. 97 | 7. 47 | 0 | 0 | 0 | −32. 9 | −12 | 7. 16 | 87. 38 | 1. 144E−02 |
| 30 | 30. 31 | 17. 5 | 7. 54 | 0 | 0 | 0 | −30. 3 | −17. 5 | 7. 4 | 85. 74 | 1. 166E−02 |
| 40 | 26. 81 | 22. 5 | 7. 62 | 0 | 0 | 0 | −26. 8 | −22. 5 | 7. 58 | 84. 37 | 1. 185E−02 |
| 50 | 22. 5 | 26. 81 | 7. 71 | 0 | 0 | 0 | −22. 5 | −26. 8 | 7. 68 | 83. 48 | 1. 198E−02 |
| 60 | 17. 5 | 30. 31 | 7. 79 | 0 | 0 | 0 | −17. 5 | −30. 3 | 7. 66 | 83. 15 | 1. 203E−02 |
| 70 | 11. 97 | 32. 89 | 7. 85 | 0 | 0 | 0 | −12 | −32. 9 | 7. 57 | 83. 3 | 1. 200E−02 |
| 80 | 6. 08 | 34. 47 | 7. 88 | 0 | 0 | 0 | −6. 08 | −34. 5 | 7. 43 | 83. 82 | 1. 193E−02 |
| 90 | 0 | 35 | 7. 87 | 0 | 0 | 0 | 0 | −35 | 7. 3 | 84. 56 | 1. 183E−02 |
| 100 | −6. 08 | 34. 47 | 7. 81 | 0 | 0 | 0 | 6. 08 | −34. 5 | 7. 2 | 85. 35 | 1. 172E−02 |
| 110 | −12 | 32. 89 | 7. 72 | 0 | 0 | 0 | 11. 97 | −32. 9 | 7. 16 | 86. 05 | 1. 162E−02 |
| 120 | −17. 5 | 30. 31 | 7. 58 | 0 | 0 | 0 | 17. 5 | −30. 3 | 7. 19 | 86. 65 | 1. 154E−02 |
| 130 | −22. 5 | 26. 81 | 7. 39 | 0 | 0 | 0 | 22. 5 | −26. 8 | 7. 25 | 87. 29 | 1. 146E−02 |
| 140 | −26. 8 | 22. 5 | 7. 17 | 0 | 0 | 0 | 26. 81 | −22. 5 | 7. 31 | 88. 23 | 1. 133E−02 |
| 150 | −30. 3 | 17. 5 | 6. 94 | 0 | 0 | 0 | 30. 31 | −17. 5 | 7. 33 | 89. 39 | 1. 119E−02 |
| 160 | −32. 9 | 11. 97 | 6. 78 | 0 | 0 | 0 | 32. 89 | −12 | 7. 33 | 90. 34 | 1. 107E−02 |
| 170 | −34. 5 | 6. 08 | 6. 72 | 0 | 0 | 0 | 34. 47 | −6. 08 | 7. 34 | 90. 66 | 1. 103E−02 |

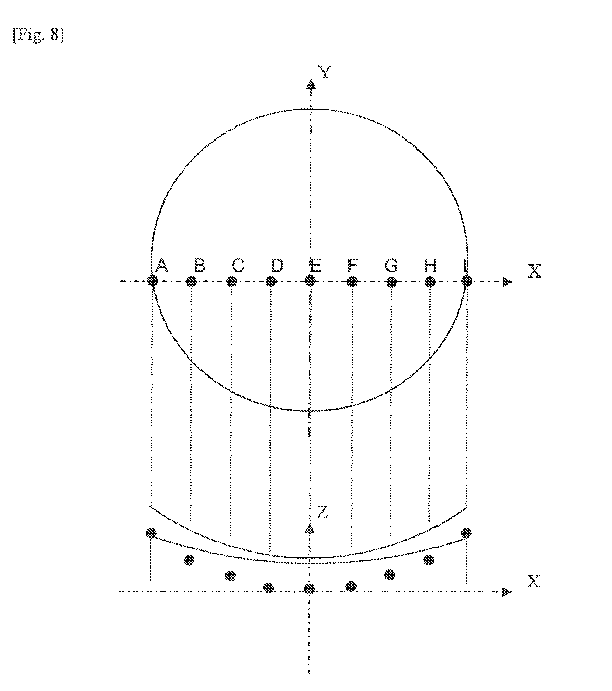

An example of the method of calculating coordinate values from three or more points will be described next. As shown in Fig. 8, the coordinate values of three or more points lying on a straight line that passes through the geometric center of the forming surface of a forming mold and connects the two edges are employed to calculate the approximate radius of curvature in the cross-section by the method of least squares in the equation of a circle. In the manner of points A to I in Fig. 8, when the coordinate points employed in the calculation in the form of n points, with n being 3 or greater, are denoted as $(X1, Y1)$, $(X2, Y2)$, ... $(Xn, Yn)$, as shown in Fig. 8, the coordinate values of cross-section ZX are given by $(X1, Z1)$, $(X2, Z2)$,...$(Xn, Zn)$. The method of least squares is employed to obtain the equation of the circle that is the closest to these n coordinate values, and the simultaneous equations of equation 5 below are solved. There is a condition that not all of these points lie on a straight line within cross-section ZX. In equation 5, a and b denote the values of coordinate values X and Z, respectively, of the center of the circle, and r denotes the radius of the circle.
[Numeral 5]

$$S = \sum_{i=1}^{n} \left\{ (Xi - a)^2 + (Zi - b)^2 - r^2 \right\}^2 \quad \text{(Equation 5)}$$

The equation of the circle constituting the best approximation is obtained when S in equation 5 assumes its lowest value. Accordingly, to obtain the values of a, b, and r that yield the lowest S, differentiation is conducted with a, b, and r, 0 is substituted, and a solution is obtained for these values, as shown in equation 6, below.
[Numeral 6]

$$\frac{\partial S}{\partial a} = -2 \cdot \sum_{i=1}^{n} \left[ \left\{ (Xi - a)^2 + (Zi - b)^2 - r^2 \right\}(Xi - a) \right] = 0$$

$$\frac{\partial S}{\partial b} = -2 \cdot \sum_{i=1}^{n} \left[ \left\{ (Xi - a)^2 + (Zi - b)^2 - r^2 \right\}(Zi - b) \right] = 0 \quad \text{(Equation 6)}$$

$$\frac{\partial S}{\partial a} = -2 \cdot r \cdot \sum_{i=1}^{n} \left\{ (Xi - a)^2 + (Zi - b)^2 - r^2 \right\} = 0$$

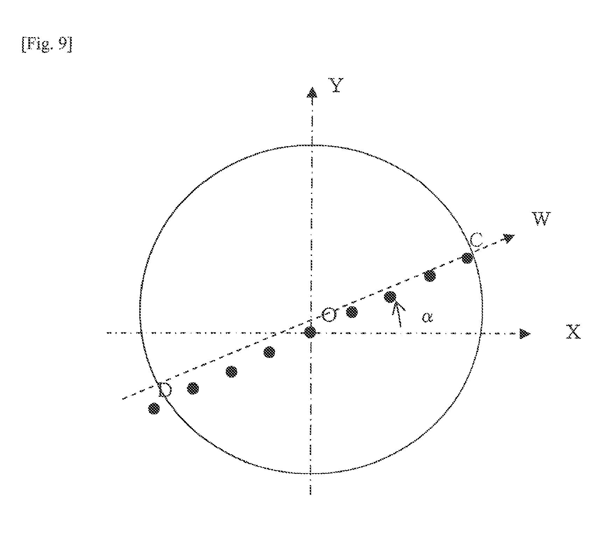

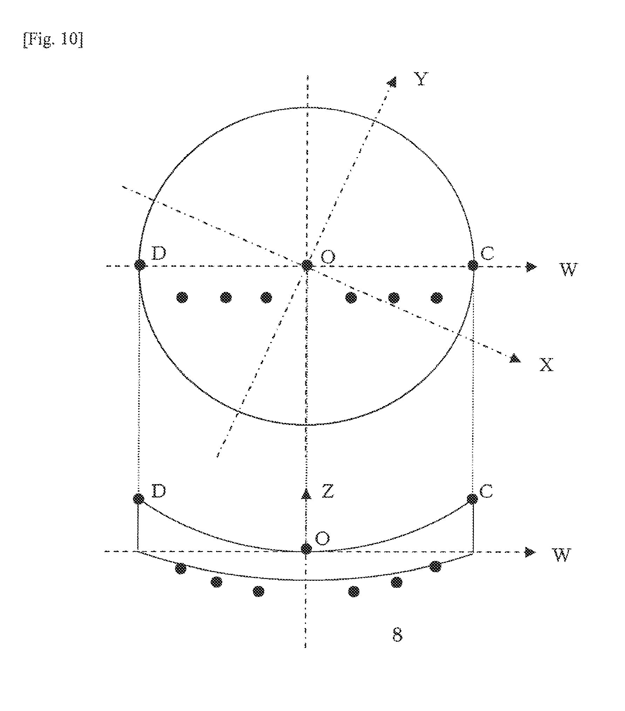

To determine the minimal radius of curvature and its direction, as shown in Fig. 5, an approximate radius of curvature is calculated for the cross-sections in directions U1, U2,... Un at a pitch of angle θ. Angle θ can be set to 1°, for example.
As shown in Fig. 9, when the n coordinate points used to calculate the direction of angle α are denoted as (X1, Y1), (X2, Y2), ... (Xn, Yn), as shown in Fig. 10, the value of the coordinates of cross-section ZW are given by (W1, Z1), (W2, Z2), ... (Wn, Zn). The equation of the circle the closest to these n coordinate values can be obtained by solving the following simultaneous equations by the least squares method. However, there is a condition that not all of the points lie on a straight line in the ZW cross-section. Equation 7 below is obtained by denoting the coordinate values W and Z of the center of the circle as a and b, respectively, and denoting the radius of the circle as r.
[Numeral 7]

$$S = \sum_{i=1}^{n} \left\{ (Wi - a)^2 + (Zi - b)^2 - r^2 \right\}^2 \quad \text{(Equation 7)}$$

The equation of the circle constituting the best approximation is obtained when S assumes its lowest value, Accordingly, to obtain the values of a, b, and r yielding the lowest S, differentiation is conducted with a, b, and r, 0 is substituted, and a, b, and r are calculated from the following simultaneous equations (equation 8).
[Numeral 8]

$$\frac{\partial S}{\partial a} = -2 \cdot \sum_{i=1}^{n} \left[ \left\{ (Wi - a)^2 + (Zi - b)^2 - r^2 \right\}(Wi - a) \right] = 0$$

$$\frac{\partial S}{\partial b} = -2 \cdot \sum_{i=1}^{n} \left[ \left\{ (Wi - a)^2 + (Zi - b)^2 - r^2 \right\}(Zi - b) \right] = 0 \qquad \text{(Equation 8)}$$

$$\frac{\partial S}{\partial a} = -2 \cdot r \cdot \sum_{i=1}^{n} \left\{ (Wi - a)^2 + (Zi - b)^2 - r^2 \right\} = 0$$

In this context, the values of coordinates W1, W2, and W3 are made identical in all directions. The various Z values (Z1, Z2, Z3) are obtained from the B-spline function (equation 9 below).
[Numeral 9]

$$Z1 = f(X1, Y1)$$
$$Z2 = f(X2, Y2) \quad \text{(Equation 9)}$$
$$Z3 = f(X3, Y3)$$

In the same manner as the calculation performed for three points based on the above method, the direction of maximum curvature can be specified using 3 or more points. Alternatively, 3 or more coordinate values -- for example, four coordinate values-- can be positioned on a line segment in the form of a straight line running between the geometric center of the forming surface of a forming mold and an edge, the approximate radius of curvature in the cross-section thereof can be calculated to specify the maximum radius of curvature.

[Controlling the temperature of a continuous heating furnace]

A description of how to control the temperature of a continuous heating furnace will be given next.
The term "continuous heating furnace" means a device that has an inlet and an outlet and conducts thermal treatment by causing an item being processed to pass through the interior of a furnace with a set temperature distribution by means of a conveyor device such as a conveyor. In a continuous heating furnace, multiple heaters devised by taking into account heat emission and radiation, and a control mechanism for air circulation within the furnace, can be used to control the temperature distribution within the furnace. Normally, the heaters are disposed in the upper and lower portions of the conveyance route through the interior of the furnace. However, a region in which heat sources are disposed on both lateral surfaces can be provided in at least a portion of the furnace in the present invention, as set forth above.
PID controls can be employed in temperature control by each sensor and heater of the continuous heating furnace. PID controls are a control method for detecting deviation between a programmed target temperature and the actual temperature and restoring (feedback) the deviation from the target temperature to 0. PID controls are a method of obtaining an output in "Proportional", "Integral", "Differential" manner when calculating from the deviation. The general equation of PID controls is given below.
[Numeral 10]

General equation of PID controls:

$$y = K_P\left(e + K_I \int e\,dt + K_D \frac{d}{dt}e\right)$$

P term:

$$K_P \cdot e_n$$

I term:

$$\int e\,dt = \lim_{\Delta t \to 0}\left(\sum_{i=0}^{n} e_i \Delta t\right) = \Delta t \Sigma e_n$$

D term:

$$\frac{d}{dt}e = \lim_{\Delta t \to 0}\left(\frac{\Delta e}{\Delta t}\right)$$

as

$$\Delta e = e_n - e_{n-1}$$

$$\frac{1}{\Delta t}(e_n - e_{n-1})$$

Thus:

$$y = K_P\left[e_n + K_I \Delta t \Sigma e_n + \frac{K_D}{\Delta t}(e_n - e_{n-1})\right]$$

In the above equations, e denotes deviation, K denotes gain (the gain with the subscript P denotes proportional gain, the gain with the subscript I denotes integral gain, and the gain with the subscript D denotes differential gain), $\Delta t$ denotes the sample time (sampling time, control frequency), and subscript n denotes the current time.
Using PID controls makes it possible to increase the precision with which the temperature is controlled within the furnace for changes in the heat quantity distribution based on the shape and quantity of inputted pieces to be processed. A nonsliding system (for example, a walking beam) can be adopted for conveyance within the electric furnace.

The continuous heating furnace need only be capable of effecting the desired temperature control, but is desirably a continuous feed-type electric furnace. For example, a continuous feed-type electric furnace can be employed in which the conveyance system is a nonsliding system, the temperature controls are PID temperature controls, the temperature measurement device is "K thermocouple 30 point made by Patina", a maximum use temperature is 800°C, the commonly employed temperature ranges from 590 to 650°C, the internal atmosphere is a dry air (free of oil and dust), the atmospheric control is in the form of an inlet air curtain, internal furnace purging, and an outlet air curtain, and the temperature control precision is ±3°C, and the cooling system is air cooling. Suction parts for suction, described further below, can be provided at 3 positions within the furnace.

In a continuous heating furnace, radiation from the heat sources within the furnace and radiating heat generated by secondary radiation from the interior of the furnace can heat the glass material to a desired temperature. The temperature of the continuous heating furnace is controlled so that a temperature rising region having a temperature distribution where the temperature rises in the conveyance direction of the forming mold is contained in the present invention. Within this temperature rising region, heating can be conducted to a temperature at which the glass material on the forming mold is capable of deformation, desirably to a temperature that is greater than or equal to the glass transition temperature of the glass constituting the glass material. The temperature rising region can be a prescribed region that begins at the inlet of the continuous heating furnace.

Within the continuous heating furnace, temperature control is desirably effected so as to comprise, from the inlet (forming mold introduction inlet) side, a temperature rising region, a constant temperature maintenance region, and a cooling region. The glass material passing through the interior of a furnace having such temperature control is heated to a temperature at which it is capable of deforming in the temperature rising region, the formation of the upper surface of the glass material is progressed in the constant temperature maintenance region. Then, the glass material is cooled in the cooling region and discharged to the exterior of the furnace. It suffices to set the length of each region, the conveying speed in each region, and the like based on the total length of the conveyance route of the furnace and the heating program.

In the constant temperature maintenance region, the temperature of the glass material is desirably maintained at a temperature greater than or equal to the glass transition temperature of the glass constituting the glass material being formed. The temperature of the glass material in the constant temperature maintenance region desirably exceeds the glass transition temperature, but is desirably lower than the glass softening temperature from the perspective of forming properties. The temperature of the glass material does not necessarily have to be continuously kept constant in the constant temperature maintenance region; within this region, the temperature of the glass material can vary by about 1 to 15°C, Additionally, the glass material that has been formed in the constant temperature maintenance region is desirably gradually cooled to room temperature in the cooling region. The heating and cooling temperatures described below refer to the temperature of the upper surface of the glass material. The temperature of the upper surface of the glass material can be measured with a contact or non-contact-type temperature gauge, for example.

In the present invention, the conveyance direction of the temperature rising region is set in the manner set forth above. Forming molds on which are positioned glass material are desirably introduced into the interior from the inlet of a continuous heating furnace in such a manner that the portion of maximum curvature on the molding surface is contained in a portion on the side of the conveyance direction as divided in two by an imaginary straight line orthogonal to the conveyance direction of the forming mold, and continuously conveyed in the same direction through the interior of the furnace.

In the present invention, the glass material is placed on the forming surface of the mold prior to forming. The glass material can be positioned on the mold so that at least a portion of the rim of the lower surface of the glass material comes into contact with the forming surface and the center portion of the lower surface of the glass material is separated from the mold. The forming mold employed in the present invention has a forming surface of varying curvature within the surface as set forth above. To stably position a glass material with a lower surface that is spherical in shape on such a forming surface, the glass material is desirably positioned so that at least 3 points on the rim of the lower surface come into contact with the forming surface. It is further desirable for the glass material to be positioned on the forming mold so that at least, on the lower surface rim portion of the glass material, two points that are positioned on a side corresponding to the reference point for measurement of far dioptric power of the eyeglass lens and one point that is positioned on a side of the reference point for measurement of near dioptric power are in contact with the forming surface. When the glass material is formed into a formed article (a casting mold or the portion thereof), the surface that was the upper surface of the glass material (the opposite surface from the surface in tight contact with the forming surface) is transferred to the eyeglass lens. The "position corresponding to the reference point for measuring the dioptric power" of the lower surface of the glass material is a portion of the lower surface of the glass material opposite the portion of the upper surface of the glass material serving as the portion that is transferred to the reference point for measuring the dioptric power of the eyeglass lens on the surface of the casting mold obtained. To stably position the glass material on the forming surface with the above three points as support points, it is desirable to form the lower surface of the glass material into a spherical shape having an average curvature that is roughly identical to the average curvature at the reference point for measuring the far dioptric power of the eyeglass lens that is to be finally obtained.

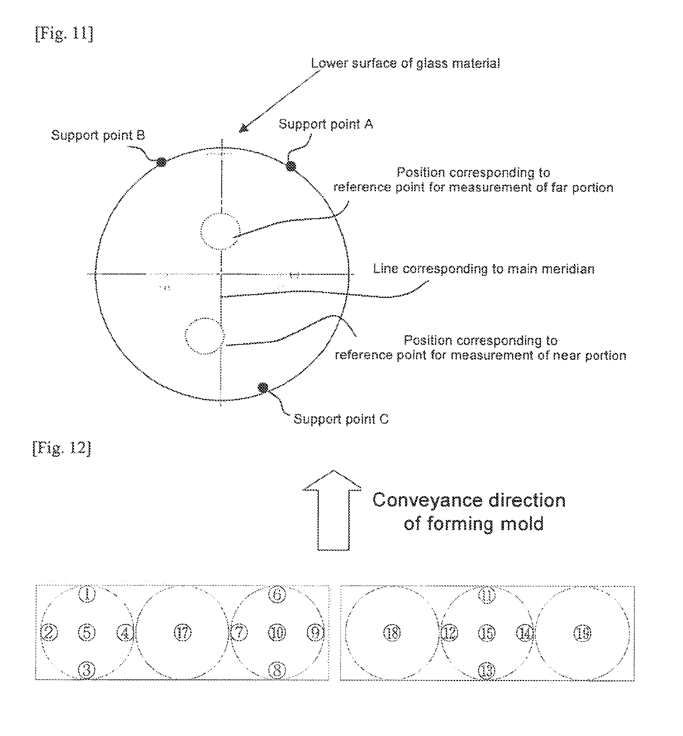

Fig. 11 is a descriptive drawing of the contact between the lower surface of the glass material for manufacturing a casting mold of progressive dioptric power lenses and the forming surface of the forming mold. In Fig. 11, support points A, B, and C are contact points of the lower surface of the glass material with the forming surface. In Fig. 11, support points A and B, which lie above a line corresponding to the lens horizon (also referred to as the "horizontal reference line" or "principal longitude") running through two alignment reference points, are two points positioned on the side corresponding to reference points for measurement of the far dioptric power, and support point C, which is lower than the meridian, is a point positioned on the side corresponding to a reference point for measurement of the near dioptric power. As shown in Fig. 11, the two points positioned on the side corresponding to reference points for measurement of the far dioptric power are desirably positioned symmetrically about the line corresponding to the main meridian that runs through the reference point for measurement of the far dioptric power of the progressive dioptric power lens on the lower surface of the glass material. Further, the support point on the side corresponding to the reference point for measurement of the near dioptric power is desirably positioned on the opposite side from the reference point for measurement of the near dioptric power relative to the line corresponding to the main meridian as shown in Fig. 11. The "line corresponding to the main meridian running through the reference point for measurement of the far dioptric power" on the lower surface of the glass material refers to the portion on the lower surface of the glass material opposite the portion on the upper surface of the glass material becoming the portion that is transferred to the portion in which the main meridian of the eyeglass lens is positioned on the surface of the casting mold.

The embodiment in which, at least three points are contact (support) points is described above; however, there may be four or more contact points.

In the present invention, it is possible that a covering member is placed over the forming mold on which the glass material has been positioned and the exposed portion on the forming surface side of the forming mold upon which the glass material has been positioned is covered. Thus, the upper surface of the glass material can be prevented from contamination by foreign matter such as airborne dust and debris in the furnace as it passes through the interior of the continuous heating furnace. Details of an covering member that can be employed in the present invention are described in WO 2007/058353A1, for example,

The conveyance direction of the forming mold in the temperature rising region is as set forth above. During conveyance through the temperature rising region, the position of the forming mold in the right-left direction can be kept constant, or can be subjected to rotation and fluctuation at a prescribed angle and amplitude. Taking into account the fact that, with the center portion in the conveyance direction as reference, there are cases where the right-left temperature distribution is not completely uniform, rotation and fluctuation are sometimes desirable to increase the uniformity of heating in a right-left direction. In an eyeglass lens that can be molded with a casting mold manufactured according to the present invention, the curvature of the intermediate region (progressive zone) present between the far portion and the near portion is specified by the added dioptric power and/or the inset amount. Generally, the greater the amount of added dioptric power and/or inset, the greater the curvature becomes. In the present invention, in the temperature rising region, it is desirable to subject the forming mold to rotation and fluctuation by an angle and amplitude determined based on the amount of added dioptric power and/or inset. The greater the amount of added dioptric power or inset, the greater the fluctuation angle and amplitude that are desirable. However, when the above-described lateral heating region is contained in the temperature rising region, the rotation and fluctuation are conducted within a scope within which it is possible to maintain the conveyance direction roughly orthogonal to the above-described imaginary straight line. Further, excessive displacement of the glass during softening is undesirable from the perspective of forming precision. Thus, the fluctuation angle during rotation and fluctuation, relative to the conveyance direction (0°), is desirably set within a range of $\pm$ 5 to 45°, and the amplitude is desirable set to within a range of 0.01 to 1 Hz. For example, the fluctuation angle can be $\pm$ 45° for an added dioptric power of 3D, $\pm$ 25° for an added dioptric power of 2D, and $\pm$ 5° for an added dioptric power of 1D.

The forming mold is conveyed so that the portion that is to be greatly deformed in the temperature rising region is positioned on the high temperature side. However, since the interior of a continuous heating furnace in which the temperature is controlled by positioning a temperature rising region, constant temperature maintenance region, and cooling region in that order will have a temperature gradient in the form of the letter "V", once one portion has been passed, the rear side in the conveyance direction reaches a high temperature. Accordingly, it is desirable in the present invention for the forming mold to be rotated at a prescribed position so that the portion that is to be greatly deformed is positioned on the high temperature side even after the temperature rising region has been passed. Normally, the highest temperature region in the furnace is within the constant temperature maintenance region. Thus, the forming mold is desirably rotated in the constant temperature maintenance region so that the portion with the least curvature in the forming surface is contained in the portion on the opposite side from the side in the conveyance direction as divided in two by an imaginary line orthogonal to the conveyance direction of the forming mold and passing through the geometric center of the forming surface. For example, in the relatively initial portion of the constant temperature region, the forming mold is desirably rotated 180° once the temperature of the glass material has reached or exceeded the glass transition temperature. To position the portion that is to be greatly deformed on the high temperature side, the forming mold is desirably conveyed while maintaining the direction after the above rotation, even in the cooling region. When a lateral heating region is contained in the constant temperature maintenance region, conveying is continued after the above rotation in such a manner that the conveyance direction remains orthogonal to the imaginary straight line.

The continuous heating furnace employed in the present invention desirably comprises a rotating mechanism capable of 180° rotation to the right and left to permit the above-described rotation and fluctuation as well as the above-described rotation. For example, a rotating shaft can be provided in the base (support base) on which the forming mold is positioned so that the shaft is positioned in the geometric center of the forming mold. The rotating shaft can be linked to a drive motor outside the furnace to permit the transmission of a drive force and control. Effecting this control with a stepping motor and sequencer permits ready control of rotational speed, angle, rotational direction, and the like. The rotating mechanism can be disposed at any position within the furnace, and is suitably disposed in just the suction parts, described further below.

To increase the forming rate of glass material in a continuous heating furnace and enhance production efficiency, a forming mold having through-holes running from the forming surface to the opposite surface from the forming surface can be employed to apply suction through the through-holes during forming.. A forming mold having through-holes is described in detail in WO 2007/058353A1. The temperature region in which a pronounced deformation-enhancing effect can be achieved by suction is normally the constant temperature maintenance region. Thus, suction is desirably conducted in the constant temperature maintenance region in the present invention.

Specific embodiments of the manufacturing method of the present invention will be described next.

Temperature control in the continuous heating furnace is conducted in single cycles of prescribed duration. An example of temperature control in which one cycle lasts 17 hours will be described below. However, the present invention is not limited to the embodiment described below.

Furnace temperature control can be conducted in seven steps. The first step (A) is a preheating step. The second step (B) is a rapid heating and temperature-rising step. The third step (C) is a slow heating and temperature-rising step. The fourth step (D) is a step in which a constant temperature is maintained. The fifth step (E) is a slow cooling step. The sixth step (F) is a rapid cooling step. And the seventh step (G) is a natural cooling step.

In the preheating step (A), which is the first step, a constant temperature close to room temperature is maintained for 90 minutes. This is done in order to establish a uniform temperature distribution throughout the glass material and to facilitate reproducibility of the thermal distribution of the glass material by temperature control during processing by heat-softening. The temperature that is maintained can be any temperature of about room temperature (about 20 to 30°C).

In rapid heating step (B), which is the second step, heating is conducted for about 90 minutes by increasing the temperature from room temperature (for example, 25°C) to a temperature 50°C below (also called "T1" hereinafter) the glass transition temperature (also referred to as "Tg" hereinafter) at a rate of about 4°C/min, for example. Then, in slow heating step (C), which is the third step, heating is conducted for 120 minutes by increasing the temperature from temperature T1 to a temperature about 50°C below the glass softening point (also called "T2" hereinafter) at a rate of 2°C/min, for example. In constant temperature maintenance step (D), which is the fourth step, temperature T2 is maintained for about 60 minutes.

The glass material that has been heated to temperature T2 is heated for about 30 minutes in the constant temperature maintaining step. Heating is then conducted for another 30 minutes at temperature T2. When a forming mold having through-holes as described above is employed, during these latter 30 minutes, suction processing can be conducted through the through-holes in the forming mold. The suction processing can be conducted by operating a suction pump positioned outside the electric furnace. The negative pressure is generated by the suction with a suction pump, applying suction to the glass material positioned in the forming mold through the through-holes of the forming mold. The generation of a suction of 80 to 150 mmHg ($\fallingdotseq$ 1.0 x $10^4$ to 1.6 x $10^4$ Pa) through a suction inlet of the prescribed heat-resistant base mold begins 30 minutes after the start of heating at temperature T2 in the electric furnace.

Once the suction has been completed, heat-softening deformation of the glass material onto the forming mold is concluded. Once deformation by heat- softening has been concluded, cooling is conducted. In slow cooling step (E), the fifth step, cooling is conducted, for example, for about 300 minutes at a rate of 1°C/min to a temperature 100°C below Tg (also called "T3" hereinafter) to fix the change in shape caused by deformation. The slow cooling step also comprises annealing elements to remove glass distortion.

Next, in rapid cooling step (F), the sixth step, cooling is conducted to about 200°C at a rate of about 1.5°C/min. There is a risk of the glass that has been processed by softening and the forming mold being damaged by their own thermal contraction and differences between each other in coefficients of thermal expansion to temperature change. Accordingly, the temperature change rate is preferably small to the extent that damage does not occur.

Further, when the temperature drops to equal to or lower than 200°C, natural cooling step (G), the seventh step, is conducted. In natural cooling step (G), natural cooling is conducted from 200°C to room temperature.

Once softening processing has been completed, the lower surface of the glass material and the forming surface of the mold fit precisely together. The upper surface of the glass material deforms based on the shape deformation of the lower surface of the glass material, forming the desired optical surface. Once the glass optical surface has been formed in the above steps, the glass material is removed from the forming mold, yielding a formed article. The formed article thus obtained can be employed as a casting mold for eyeglass lenses having a compound surface comprised of a toric surface and a progressive surface, preferably as a casting mold for progressive dioptric power lenses, both surfaces of which are aspherical, Alternatively, a portion such as the rim portion can be removed and then the formed article can be employed as a casting mold for such eyeglass lenses.

The continuous heating furnace comprising the lateral heating region as described above is not limited for use in the method of manufacturing a lens casting mold of the present invention. An example of the method of manufacturing a lens casting mold using the above continuous heating furnace is the following embodiment (referred to as "Reference Aspect A", hereinafter).

[Reference Aspect A]

A method of manufacturing a casting mold for a lens having a toric surface by introducing a forming mold, with a forming surface on which is positioned a glass material being formed, into a continuous heating furnace and conducting thermal treatment while conveying the forming mold in the furnace to form an upper surface of the glass material being formed into a shape of a molding surface for forming a toric surface comprising:

utilizing, as the forming mold, a forming mold having a forming surface comprising two points of maximum curvature on an imaginary line passing through a geometric center at opposing positions roughly equidistant from the geometric center;
utilizing a continuous heating furnace comprising a region in which heat sources are positioned on both lateral surfaces (a lateral heating region) as the continuous heating surface; and
conveying the forming mold so that the conveyance direction of the forming mold is roughly orthogonal to the imaginary line in the above region.

The lateral heating region may comprise a region in which the glass material being formed is heated to the glass transition temperature of the glass.
The lens casting mold manufactured according to Reference Aspect A may be a casting mold for an astigmatic dioptric power lens.
The glass material being formed in Reference Aspect A may be a glass with a lower surface being a spherical surface, a planar surface, or an aspherical surface with centrosymmetry, a glass having upper and lower surfaces being spherical, or a glass having one of the above shape and comprising astigmatic (toric) component on the upper surface thereof.

Reference Aspect A will be described below.

Eyeglass lenses having a toric surface include astigmatism-correcting lenses in addition to the progressive dioptric power lenses, both surfaces of which are aspherical, described for Aspect II. Such lenses having a toric surface comprise two points of maximum curvature at symmetric positions on the main meridian. At points of maximum curvature, the curve is the deepest on the main meridian. There are also symmetric positions at two points of maximum curvature on an axis corresponding to the main meridian on the molding surface of a mold for forming such toric surfaces. Furthermore, there are also symmetric positions at two points of maximum curvature on an axis corresponding to the main meridian on the forming surface of the forming mold for forming the above mold by the hot sag forming method, in the same manner as on the molding surface of the mold. That is, an axis having two points of maximum curvature at symmetric positions based on the geometric center is present on the forming surface of the above forming mold. Accordingly, as set forth for Aspect II, the present inventors utilized these shape characteristics, and discovered that it was possible to control deformation due to heat softening and readily form the molding surface of the mold by causing the forming mold on the forming surface of which the glass material being formed was positioned to pass through the interior of a continuous heating furnace in which heat sources were positioned on both lateral surfaces thereof, so that the above axis was roughly orthogonal to the conveyance direction. For example, when the glass material being formed was positioned on a forming surface of the above-described shape and formed in a continuous heating furnace having a temperature distribution such that the temperature increased from the inlet to the outlet, since it deformed more rapidly on the side in the conveyance direction (high temperature side), there was great variation in the timing at which it came into tight contact with the forming surface of the forming mold depending on the position of the lower surface of the glass material, producing astigmatism that was undesirable in eyeglass correction and sometimes compromising the sensation created by wearing the eyeglass because the deviation from the design value was asymmetric. In contrast, by providing a region in which heat sources were positioned on both lateral surfaces within the continuous heating furnace and conveying the forming mold through this region such that the conveyance direction was roughly orthogonal to the above axis, it was possible to heat the portion to be greatly deformed with right-left uniformity, making it possible to match the timing of tight contact between the lower surface of the glass material and the forming surface of the forming mold in all portions of the surface. Reference Aspect A was devised on the basis of these discoveries. Reference Aspect A permits the manufacturing with high production efficiency of a casting mold for eyeglass lenses permitting the molding of lenses for astigmatic correction affording an excellent wearing sensation.
In Reference Aspect A, the above imaginary line is suitably specified based on the axis of astigmatism in a prescription. The optical surface of an eyeglass lens generally has a center asymmetric shape, excluding monofocal lenses with just spherical surface dioptric power. Lenses comprising a toric component are symmetric about a straight line passing through the optical center (also referred to as "axial symmetry" hereinafter). The toric component is prescribed with a magnitude suited to the degree of astigmatism. The magnitude of astigmatism and the direction of the axis of astigmatism are included in the prescription, are clearly recorded on the prescription form when ordering a lens, and can be consulted. The astigmatic dioptric power and the direction of the axis of astigmatism generally differ with each lens ordered. In the case of a fused surface (toric or atoric optical surface) of a toric surface and a center symmetric shape (spherical dioptric power lens), regardless of the magnitude of the toric component, the directions of the axes of maximum and minimum curvature of the lens surface depend solely on the direction of the toric axis. The directions of the maximum and minimum axes can be specified by consulting the prescription. For example, when the astigmatic dioptric power is indicated as a negative value in the prescription, the direction of the axis of astigmatism will have a maximum radius of curvature. Additionally, the axial direction of the minimum radius of curvature will be orthogonal to the axis of astigmatism. Accordingly, the shape of the forming mold can be specified as one in which the direction of the axis in which the level of deformation of the glass material is large is orthogonal to the axis of astigmatism of the prescription. When the astigmatic dioptric power is indicated as a positive value in the prescription, the direction matching the axis of astigmatism in the prescription will be the direction of the axis having the minimum radius of curvature. Accordingly, the shape of the forming mold can be specified as one in which the direction of the axis in which the level of deformation of the glass material is large is aligned with the axis of astigmatism in the prescription. Although this varies depending on how the prescription is written (whether the astigmatic dioptric power is denoted as a positive or negative value), it is possible to position the forming mold with the direction of the axis of the astigmatic dioptric power in the conveyance direction or orthogonal to the conveyance direction.

The remaining details of Reference Aspect A are as set forth above in the description of the method of manufacturing a lens casting mold of the present invention. Reference Aspect A makes it possible to remove the glass material from the forming mold once an optical surface of the glass has been formed, yielding a formed article. The formed article thus obtained can be employed as a casting mold for eyeglass lenses having a toric surface, is desirably employed as a casting mold for eyeglass lenses for correcting astigmatism, and is preferably employed as a casting mold for astigmatic dioptric power lenses. Further, the formed article can be employed as a casting mold for eyeglass lenses by removing a portion thereof, such as the rim portion. Reference Aspect A readily permits the manufacturing with good production efficiency of casting molds for lenses for correcting astigmatism.

## EXAMPLES

The present invention will be described below based on Examples. However, the present invention is not limited to the embodiments shown in Examples.

Determining the temperature distribution within a continuous heating furnace

The temperature distribution of a glass material in a continuous heating furnace in which platelike heaters were positioned vertically as well as on both lateral surfaces throughout the furnace was evaluated under the following conditions.

An electric furnace was employed that had 2 horizontal rows and 54 vertical takts on its interior, permitting the positioning of three ceramic molds and preforms (glass material) each on plates of heat-resistant stainless steel in each of the two horizontal rows. The temperature distribution was measured in the four directions at a maximum and in the center of the surface of each preform. Measurement was conducted with 19 sensors, which was thought to be the largest number of sensors that could be used without compromising the conveyor system. Fig. 12 shows the sensor layout in the horizontal direction. The temperature was measured in the center and at positions 10 mm inside the perimeter along the outer periphery of the preform. The smallest number was positioned to the outlet side of the electric furnace. In Fig. 12, sensor number 16, not shown, was used to measure the room temperature.

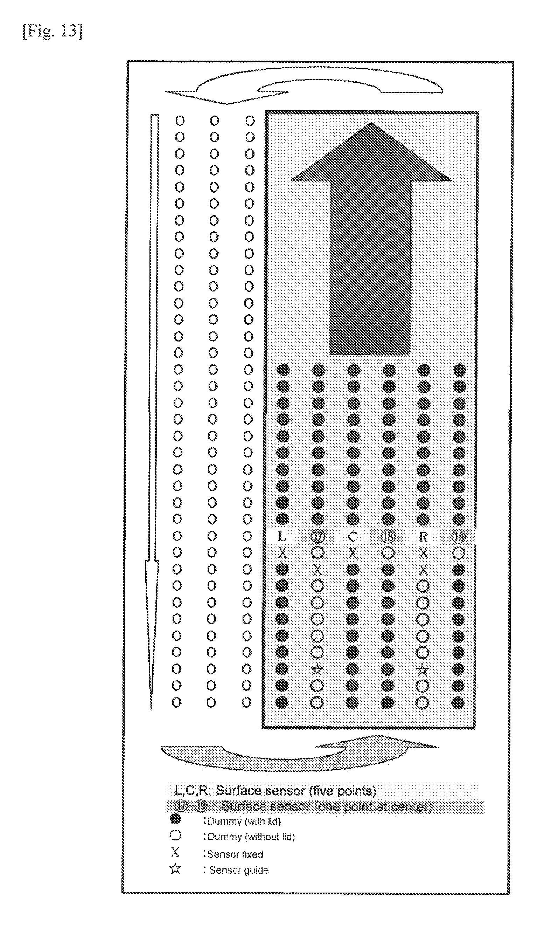

An electric furnace equipped in this fashion with sensors was employed during normal mass production charging. Dummy ceramic molds were positioned in front of and behind the sensors. The interior of the furnace was controlled to achieve the temperature distribution described in the specific embodiment above, and the electric furnace was operated. Fig. 13 shows the layout within the electric furnace.

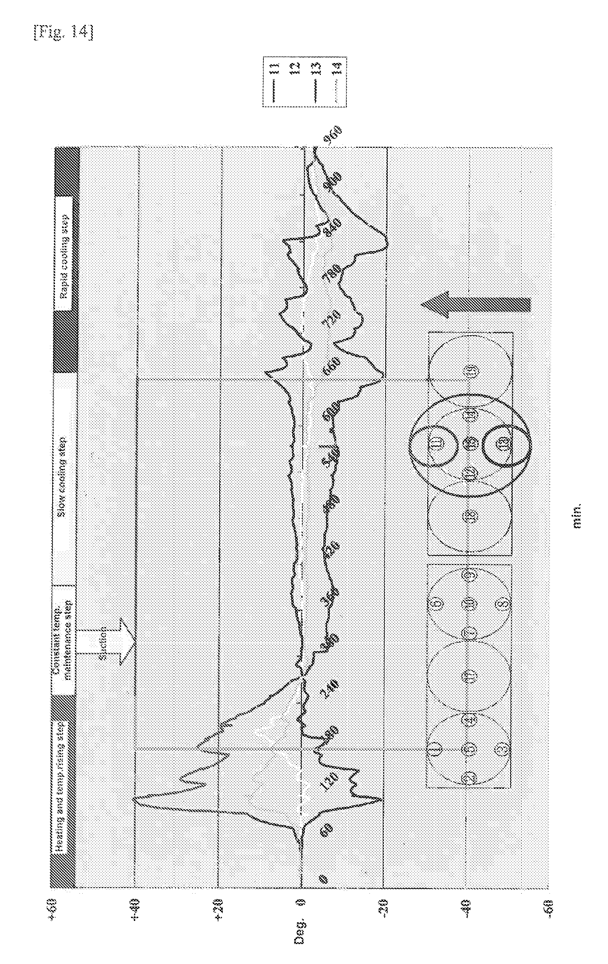

Fig. 14 shows the results of temperature deviation measurement (center portion) by sensor nos. 11, 12, 13, and 14. As shown in Fig. 14, the temperature at the center of each of the six horizontal preforms was kept to ± 5°C in the range of equal to or higher than 600°C. In the range of temperature increase from the glass transition temperature Tg (485°C) to the maximum temperature, a difference of about ± 15°C was observed. For example, along the axis of the direction of advance within the electric furnace, the side on the direction of advance was 15°C higher from Tg to the maximum temperature. In the vicinity of the maximum temperature, the side of the direction of advance was observed to be 5°C lower on average.

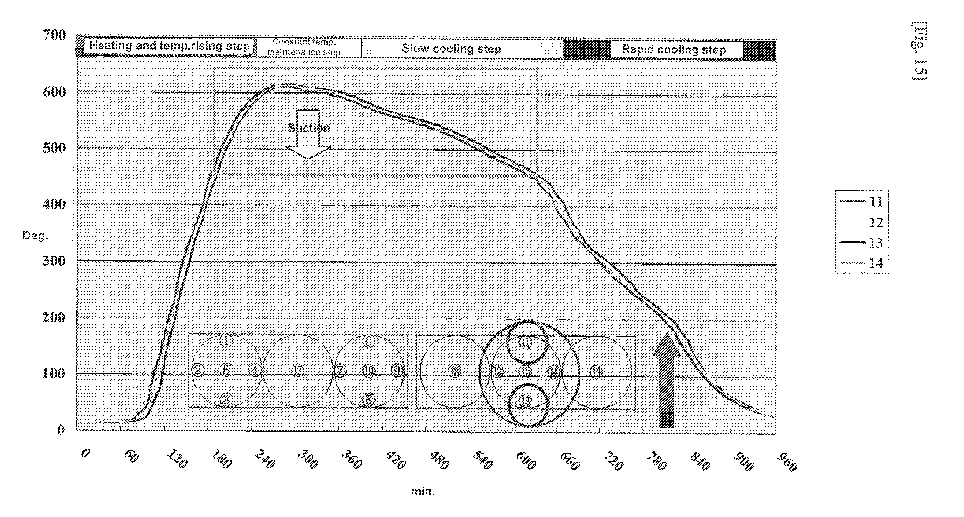

The temperatures of all 6 preforms in the horizontal direction were measured. Fig. 15 shows the results of evaluation of the temperature distribution in the direction of advance and in a direction orthogonal to the direction of advance on the lenses in the electric furnace. As indicated in Fig. 15, the difference in temperature in front and behind on the preform in the direction of advance was greatest in the heating and temperature rising step. The temperature difference decreased at the maximum temperature above Tg, which was the final step in the heating and temperature rising step. The difference in temperature went to 0 in the initial period of the low temperature maintenance step, and then the temperature in the direction of advance became lower. This state of temperature difference was maintained from the subsequent slow cooling step to the rapid cooling step.

[Example 1]

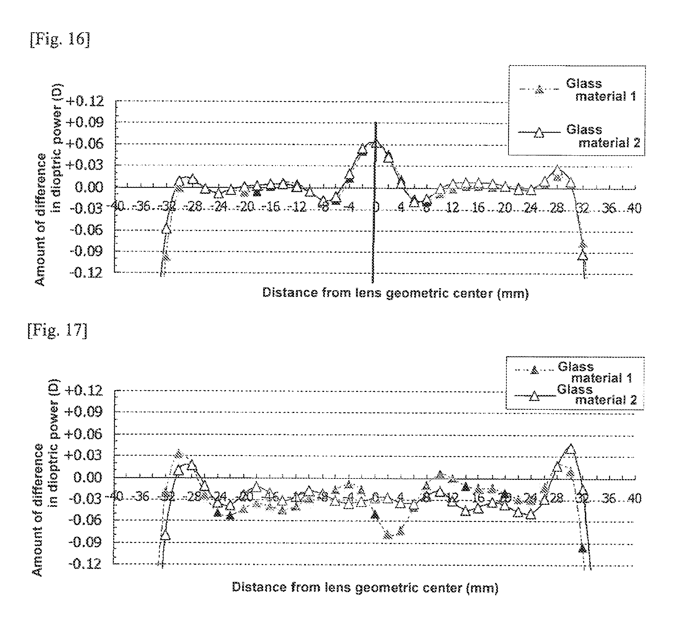

Two double-spherical-surface glass preforms of uniform thickness in the normal direction were positioned on the forming surfaces of forming molds having forming surfaces corresponding to a progressive dioptric power lens, both surfaces of which are aspherical, having a compound surface comprising a toric surface and a progressive surface with a far portion and a near portion. Next, the forming molds on which the preforms had been positioned were introduced into an electric furnace such that the direction of maximum average curvature from the geometric center of the forming surface toward the rim portion was aligned with the conveyance direction, and conveyed through the interior of the furnace. In this state, the angle between a straight line corresponding to the axis of astigmatism of the toric surface of the forming surface of the forming molds and the conveyance direction was 90°. Temperature control was effected within the electric furnace in the same manner as set forth above for the specific embodiment In the constant temperature maintenance step, when the temperature of the preform exceeded Tg, suction by the forming mold was conducted and the forming mold was rotated 180°. The difference in shape between the upper surface shape of the glass material that was discharged to the exterior of the furnace and the design value (the measured value - the design value) was measured with a Talysurf. The results are given in Fig. 16.

[Comparative Example 1]

With the exception that the orientation of the forming molds when introduced into the electric furnace was changed by 180°, two glass preforms identical to those in Example 1 were heated and formed. The difference in shape between the upper surface of the glass material discharged from the furnace and the design value was measured, in the same manner as in Example 1. The results are given in Fig. 17.

As shown in Fig. 16, the amount of difference in Example 1 was equal to or less than 0.03 D, indicating that it was possible to reduce the absolute amount of difference, In Example, symmetry of the difference distribution was maintained. Maintaining the symmetry of the amount of difference in manufacturing a lens made it possible to inhibit the generation of astigmatism that was undesirable in eyeglass correction. At the same time, it was possible to reduce the sense of malaise when wearing the eyeglass lens caused by the asymmetry of the amount of difference.

In contrast, no symmetry in difference was observed in Comparative Example 1 as shown in Fig. 17, and the amount of difference was large.

According to the present invention, it is readily possible to manufacture, with good production efficiency, casting molds for progressive dioptric power lenses, and more specifically, casting molds for progressive dioptric power lenses, both surfaces of which are aspherical.

BRIEF DESCRIPTION OF THE DRAWINGS

[Fig. 1] Fig. 1 shows a descriptive drawing of the hot sag forming method.
[Fig. 2] Fig. 2 shows an example (sectional view) of glass that is essentially equal in thickness in the normal direction.
[Fig. 3] Fig. 3 shows an example of the arrangement of the position corresponding to a reference point for measurement of far portion and the position corresponding to a reference point for measurement of near portion on the forming surface of the forming mold.
[Fig. 4] Fig. 4 is a descriptive drawing of a method for determining the conveyance direction of a forming mold in a temperature rising region.
[Fig. 5] Fig. 5 is a descriptive drawing of a method for determining the conveyance direction of a forming mold in a temperature rising region.
[Fig. 6] Fig. 6 is a descriptive drawing of a method for determining the conveyance direction of a forming mold in a temperature rising region.
[Fig. 7] Fig. 7 is a descriptive drawing of a method for determining the conveyance direction of a forming mold in a temperature rising region.
[Fig. 8] Fig. 8 is a descriptive drawing of a method for determining the conveyance direction of a forming mold in a temperature rising region.
[Fig. 9] Fig. 9 is a descriptive drawing of a method for determining the conveyance direction of a forming mold in a temperature rising region.

[Fig. 10] Fig. 10 is a descriptive drawing of a method for determining the conveyance direction of a forming mold in a temperature rising region.

[Fig. 11] Fig. 11 is a descriptive drawing of contact between the forming surface of a forming mold and the lower surface of a glass material for manufacturing a casting mold for progressive dioptric power lenses.

[Fig. 12] Fig. 12 shows the layout of sensors used to determine the temperature distribution in a continuous heating furnace.

[Fig. 13] Fig. 13 shows the layout in an electric furnace during the determination of the temperature distribution in a continuous heating furnace.

[Fig. 14] Fig. 14 is the results of determination (measurement (center portion) deviation results) of the temperature distribution in a continuous heating furnace.

[Fig. 15] Fig. 15 is the results of determination (of the temperature distribution in the direction of advance and in a direction orthogonal to the direction of advance) of the temperature distribution in a continuous heating furnace.

[Fig. 16] Fig. 16 shows a difference in shape between the upper surface of the glass material formed in Example 1 and the design value.

[Fig. 17] Fig. 17 shows a difference in shape between the upper surface of the glass material formed in Comparative Example 1 and the design value.

**Claims**

1. A method of manufacturing a lens casting mold by introducing a forming mold, with a forming surface on which is positioned a glass material being formed, into a continuous heating furnace and conducting thermal treatment while conveying the forming mold in the furnace to form an upper surface of the glass material being formed into a shape of a molding surface for forming a surface comprising a progressive surface, comprising:

   controlling a temperature of the continuous heating furnace so that the continuous heating furnace comprises a temperature rising region having a temperature distribution such that the temperature rises in a conveyance direction of the forming mold;
   utilizing a forming mold having a curvature distribution on the forming surface as the forming mold; and
   conveying the forming mold in the temperature rising region so that a portion with the largest curvature on the forming surface is comprised in a portion on a side of the conveyance direction as divided in two by an imaginary line, the imaginary line running orthogonally to the conveyance direction of the forming mold and passing through a geometric center of the forming surface.

2. The method of manufacturing according to claim 1, wherein the conveying in the temperature rising region is conducted such that a direction at which an average curvature from the geometric center toward a rim portion is the largest on the forming surface is approximately identical to the conveyance direction.

3. The method of manufacturing according to claim 1 or 2, wherein the temperature of the continuous heating furnace is controlled so as to comprise, from a forming mold introduction inlet side, the temperature rising region, a constant temperature maintenance region, and a cooling region in this order.

4. The method of manufacturing according to any of claims 1 to 3, comprising subjecting the forming mold to rotation and fluctuation.

5. The method of manufacturing according to claim 4, wherein a fluctuation angle and amplitude in the rotation and fluctuation are determined based on an added dioptric powder and/or an inset amount.

6. The method of manufacturing according to claim 4 or 5, wherein, in the rotation and fluctuation, a fluctuation angle ranges from $\pm 5$ to 45° relative to the conveyance direction and an amplitude ranges from 0.01 11 Hz.

7. The method of manufacturing according to any of claims 3 to 6, comprising, in the constant temperature maintenance region, rotating the forming mold so that a portion with the largest curvature on the forming surface is comprised in a portion on an opposite side from the side in the conveyance direction as divided in two by an imaginary line running orthogonally to the conveyance direction of the forming mold and passing through a geometric center of the forming surface.

8. The method of manufacturing according to any of claims 3 to 7, wherein a temperature of the glass material being formed that is positioned on the forming mold being conveyed in the constant temperature maintenance region is equal to or higher than a glass transition temperature of the glass.

9. The method of manufacturing according to any of claims 1 to 8, wherein
the surface comprising a progressive surface is a compound surface comprised of a toric surface and a progressive surface;
the forming mold comprises, on the imaginary line, two points where a curvature reaches maxima on the line, with the two points being positioned opposite each other and roughly equidistant from the geometric center; and
the method comprises:

    utilizing a continuous heating furnace comprising a lateral heating region in which heat sources are disposed on two lateral surfaces as the continuous heating furnace, and
    conveying the forming mold in the lateral heating region so that the imaginary line and the conveyance direction of the forming mold are roughly orthogonal.

10. The method of manufacturing according to claim 9, wherein
the lateral heating region is a region in which the glass material being formed is heated to a temperature equal to or higher than a glass transition temperature of the glass.

11. The method of manufacturing according to any of claims 1 to 10, utilizing, as the glass material being formed, a glass with a lower surface being a spherical surface, a planar surface, or an aspherical surface with centrosymmetry.

12. The method of manufacturing according to claim 11, utilizing, as the glass material being formed, a glass having upper and lower surfaces being spherical.

[Fig. 1]

(a) Before heating

(b) After heating

[Fig. 2]

[Fig. 3]

Forming surface of forming mold

Line A

Position corresponding to reference point for measurement of far portion

Line corresponding to main meridian

Position corresponding to reference point for measurement of near portion

Geometric center

Conveyance direction of forming mold

[Fig. 4]

[Fig. 5]

[Fig. 6]

[Fig. 7]

[Fig. 8]

[Fig. 9]

[Fig. 10]

[Fig. 11]

Lower surface of glass material

Support point B

Support point A

Position corresponding to
reference point for measurement of far portion

Line corresponding to main meridian

Position corresponding to
reference point for measurement of near portion

Support point C

[Fig. 12]

Conveyance direction
of forming mold

[Fig. 13]

L,C,R: Surface sensor (five points)
⑰-⑲ Surface sensor (one point at center)
● :Dummy (with lid)
○ :Dummy (without lid)
X :Sensor fixed
☆ : Sensor guide

[Fig. 14]

[Fig. 15]

[Fig. 16]

[Fig. 17]

## INTERNATIONAL SEARCH REPORT

| | International application No. |
| --- | --- |
| | PCT/JP2008/071352 |

A. CLASSIFICATION OF SUBJECT MATTER
*B29C33/38*(2006.01)i, *C03B23/025*(2006.01)i, *G02B3/00*(2006.01)i, *G02C7/06*(2006.01)i, *G02C13/00*(2006.01)i

According to International Patent Classification (IPC) or to both national classification and IPC

B. FIELDS SEARCHED

Minimum documentation searched (classification system followed by classification symbols)
B29C33/38, C03B23/025, G02B3/00, G02C7/06, G02C13/00

Documentation searched other than minimum documentation to the extent that such documents are included in the fields searched
Jitsuyo Shinan Koho        1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | WO 2007/063735 A1  (Hoya Corp.), 07 June, 2007 (07.06.07), Par. Nos. [0068] to [0075] & WO 2007/058353 A1 | 1-12 |
| A | WO 2006/095007 A1  (GLAVERBEL), 14 September, 2006 (14.09.06), Page 10, lines 12 to 20; page 19, lines 8 to 17 & US 2008/0134721 A1    & EP 1874701 A | 1-12 |
| A | JP 10-291828 A  (Asahi Glass Co., Ltd.), 04 November, 1998 (04.11.98), Par. No. [0035] & US 6240746 B1 | 1-12 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 04 February, 2009 (04.02.09) | 17 February, 2009 (17.02.09) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/071352

C (Continuation).   DOCUMENTS CONSIDERED TO BE RELEVANT

| Category* | Citation of document, with indication, where appropriate, of the relevant passages | Relevant to claim No. |
|---|---|---|
| A | JP 63-306390 A  (NGK Spark Plug Co., Ltd.), 14 December, 1988 (14.12.88), Page 2, upper right column, lines 1 to 12 (Family: none) | 4-12 |

Form PCT/ISA/210 (continuation of second sheet) (April 2007)

**REFERENCES CITED IN THE DESCRIPTION**

**Patent documents cited in the description**

- JP 2008020860 A
- JP 2008020875 A
- JP 2008020921 A
- JP 6130333 A
- JP 4275930 A
- JP 63306390 A
- WO 2007058353 A1